(19) Europäisches Patentamt
European Patent Office
Office européen des brevets

(11) **EP 2 756 205 B1**

(12) **EUROPÄISCHE PATENTSCHRIFT**

(45) Veröffentlichungstag und Bekanntmachung des Hinweises auf die Patenterteilung:
**01.02.2017 Patentblatt 2017/05**

(21) Anmeldenummer: **12759113.9**

(22) Anmeldetag: **13.09.2012**

(51) Int Cl.:
**F16D 55/226** (2006.01)

(86) Internationale Anmeldenummer:
**PCT/EP2012/067915**

(87) Internationale Veröffentlichungsnummer:
**WO 2013/037871 (21.03.2013 Gazette 2013/12)**

(54) **SCHEIBENBREMSE EINES KRAFTFAHRZEUGS UND BREMSBELAG**

DISC BRAKE OF A MOTOR VEHICLE AND BRAKE LINING

FREIN À DISQUE D'UN VÉHICULE AUTOMOBILE ET GARNITURE DE FREIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.09.2011 EP 11181212**

(43) Veröffentlichungstag der Anmeldung:
**23.07.2014 Patentblatt 2014/30**

(73) Patentinhaber: **KNORR-BREMSE Systeme für Nutzfahrzeuge GmbH
80809 München (DE)**

(72) Erfinder: **IRASCHKO, Johann
85301 Schweitenkirchen (DE)**

(56) Entgegenhaltungen:
**EP-A1- 0 641 949      EP-A1- 1 637 759
EP-A2- 1 234 994      GB-A- 2 056 602
GB-A- 2 163 500**

EP 2 756 205 B1

## Beschreibung

Die vorliegende Erfindung betrifft eine Scheibenbremse eines Kraftfahrzeugs gemäß dem Oberbegriff des Anspruchs 1.

Gattungsgemäße Scheibenbremsen bestehen im Wesentlichen aus einer sich im Betrieb mit einer Fahrzeugachse drehenden Bremsscheibe, mindestens einem oder mehreren ein- oder vorzugsweise beidseitig der Bremsscheibe angeordneten Bremsbelägen, einem Bremssattel und vorzugsweise einem sich ein- oder beidseits der Bremsscheibe erstreckenden Bremsträger. Die den Bremsträger aufweisende Scheibenbremse weist vorzugsweise einen relativ zum Bremsträger beweglichen Schiebesattel oder einen Schwenksattel auf.

Um eine sichere Funktion der Scheibenbremse zu gewährleisten, ist es erforderlich, die Bremsbeläge im Bremssattel bzw. den Bremsträger zuverlässig zu führen und abzustützen.

Der gattungsgemäße bekannte (und insoweit auch der erfindungsgemäße) Bremsträger weist dazu vorzugsweise auf jeder Seite der Bremsscheibe vorzugsweise zwei in Umfangsrichtung der Bremsscheibe hintereinander angeordnete und durch wenigstens eine Strebe miteinander verbundene sowie radial von einem Rahmen vorkragende Trägerhörner auf, die einen Belagschacht zur Aufnahme eines Bremsbelags seitlich begrenzen. Der Belagschacht ist dabei nach dem Stand der Technik vorzugsweise ferner radial nach außen hin offen ausgebildet, so dass die Bremsbeläge radial von außen in ihn einschiebbar sind. Nach dem Einsetzen werden die Bremsbeläge durch einen Niederhaltebügel radial fixiert. Optional kann eine Belaghaltefeder vorgesehen sein, insbesondere eine, welche federnd zwischen dem Belagniederhaltebügel und dem Bremsbelag angeordnet ist und wirkt.

Die Bremsbeläge sind im Betrieb einer Vielzahl von Beanspruchungen ausgesetzt. So werden die Bremsbeläge hoch thermisch beansprucht und mechanisch belastet. Es ergeben sich für die beiden Betriebszustände a) Bremse betätigt und b) Bremse unbetätigt, unterschiedliche Belastungszustände.

Bei einer Betätigung der Bremse wird der Bremsbelag hohen Druck- und Querkräften ausgesetzt, wobei der Bremsbelag die Aufgabe zu erfüllen hat, die an der Reibfläche des Bremsbelags erzeugte Querkräfte über die Reibmasse in eine Belagträgerplatte und von dort in den Bremssattel bzw. den Bremsträger einzuleiten. Die auf den Bremsbelag wirkenden Querkräfte werden dabei vor allem von dem auslaufseitigen Trägerhorn, also dem in Drehrichtung der Bremsscheibe vorderen Trägerhorn, aufgenommen.

Des Weiteren muss der Bremsbelag die vom Bremssattel erzeugte Zuspannkraft in eine möglichst gleichmäßig auf der Reibfläche verteilte Druckkraft verwandeln. Dazu muss die vom Bremssattel erzeugte Zuspannkraft mit Hilfe der biegesteifen Belagträgerplatte in eine Flächenlast umgewandelt werden.

Problematisch ist, dass wegen der begrenzten Bauraumgegebenheiten die am Bremsträger anliegenden stirnseitigen Schmalseiten oder Stützflächen der Belagträgerplatte des bekannten Bremsbelages bei einem Bremsvorgang eine Drehbewegung des Bremsbelags nicht verhindern können. Diese Drehbewegung kann sich negativ auf das Lüftspiel, d.h. den Freigang zwischen Reibbelag und Bremsscheibe sowie auf das Verschleißverhalten der Bremsbeläge, insbesondere in Form eines Schrägverschleißes und den Freigang der Beläge auswirken.

Zum Stand der Technik sei die DE 29 26 818 A1 genannt.

Aus der EP 1 234 994 A2 ist eine Scheibenbremse mit einem Bremsbelaghalter und einem in diesem einliegenden Bremsbelag bekannt, wobei zur Abführung von bei einem Bremsvorgang auf der Bremsbelag wirkende Querkräfte radial von der Drehachse der Bremsscheibe weg aufeinander zu laufende Abstützflächen an der Einlaufseite und der Auslaufseite des Bremsbelaghalters vorgesehen sind, die von der Drehachse der Bremsscheibe abgewandte Randflächen überspannen und gegen die der Bremsbelag bei einem Bremsvorgang gedrückt wird.

Aus der GB 2 163 500 A ist eine Scheibenbremse mit einem Bremsträger und einem von diesem gehaltenen Bremsbelag bekannt, bei dem die Trägerplatte sowohl ein- als auch auslaufseitig mit Vorsprüngen versehen ist, die in entsprechende ein- und auslaufseitig vorgesehene Ausnehmungen des Bremsträgers eingreifen, so dass der Bremsbelag ein- und auslaufseitig formschlüssig im Bremsträger gehalten ist.

Aufgabe der vorliegenden Erfindung ist es, eine Scheibenbremse der gattungsgemäßen Art derart weiter zu entwickeln, dass die oben beschriebenen negativen Auswirkungen auf das Betriebsverhalten weitgehend vermieden werden.

Diese Aufgabe wird durch eine Scheibenbremse mit den Merkmalen des Anspruchs 1 gelöst.

Bei der erfindungsgemäßen Scheibenbremse, bei der das einlaufseitige Trägerhorn des Bremsträgers der Scheibenbremse und die diesen benachbarten Stützfläche der Belagträgerplatte ineinander greifen, ist der Bremsbelag an einer Abstützstelle am auslaufseitigen Trägerhorn abgestützt, die in Y-Richtung unterhalb einer die Gesamtreibungskraft darstellenden Kraftwirkungslinie liegt.

Als einlaufseitiges Trägerhorn wird dabei das in einer Hauptdrehrichtung der Bremsscheibe, also der Drehrichtung der Bremsscheibe während einer Vorwärtsfahrt des Kraftfahrzeugs, hintere Trägerhorn bezeichnet.

Entsprechend wird als auslaufseitiges Trägerhorn das in einer Hauptdrehrichtung der Bremsscheibe, also der Drehrichtung der Bremsscheibe während einer Vorwärtsfahrt des Kraftfahrzeugs, vordere Trägerhorn bezeichnet.

Die derart erzielbare Kraftverteilung auf beide Trägerhörner wirkt sich vorteilhaft auf das Bremsverhalten aus.

Einerseits ergibt sich am Bremsbelag ein definiertes Drehmoment um eine zur Drehachse der Bremsscheibe parallele Z-Achse. Durch dieses Drehmoment wird auch einlaufseitig am Trägerhorn vorteilhaft eine Abstützkraft erzeugt und somit auch diese Seite des Bremsträgers in den Kraftfluss während eines Bremsvorgangs miteinbezogen, wodurch wiederum eine günstigere Kraftverteilung bzw. - einleitung im Bremsträger erreicht wird. Bei konventionellen Bremsträgern, ohne einlaufseitige Abstützung des Bremsbelags, findet dagegen eine anteilig sehr hohe große Belagabstützung am auslaufseitigen Trägerhorn statt.

Vorteilhaft ist sodann die im Vergleich zum Stand der Technik gleichmäßigere Kraftverteilung auf beide Trägerhörner bei einem Bremsvorgang, zu der auch der relativ niedrige höchste Abstützungspunkt (in Y-Richtung) wesentlich beiträgt.

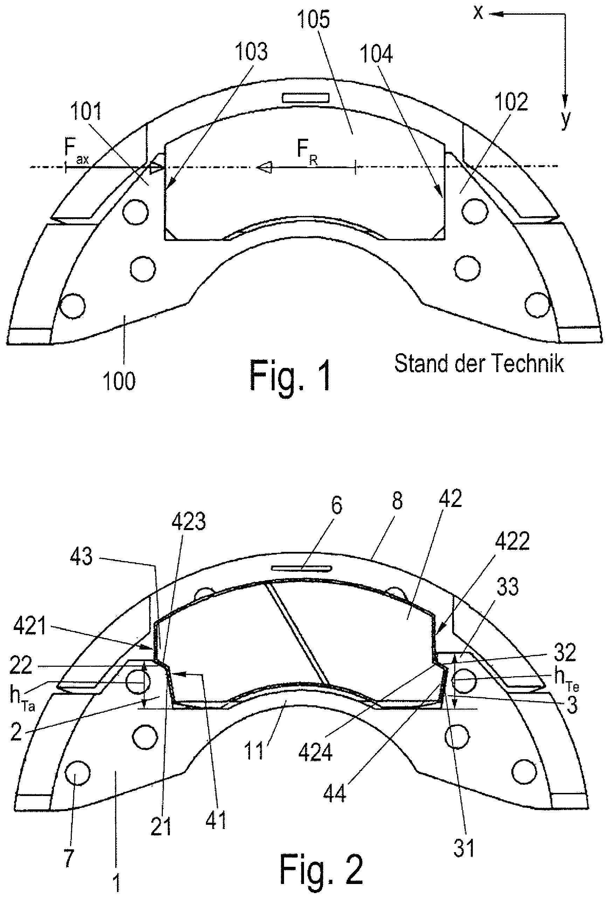

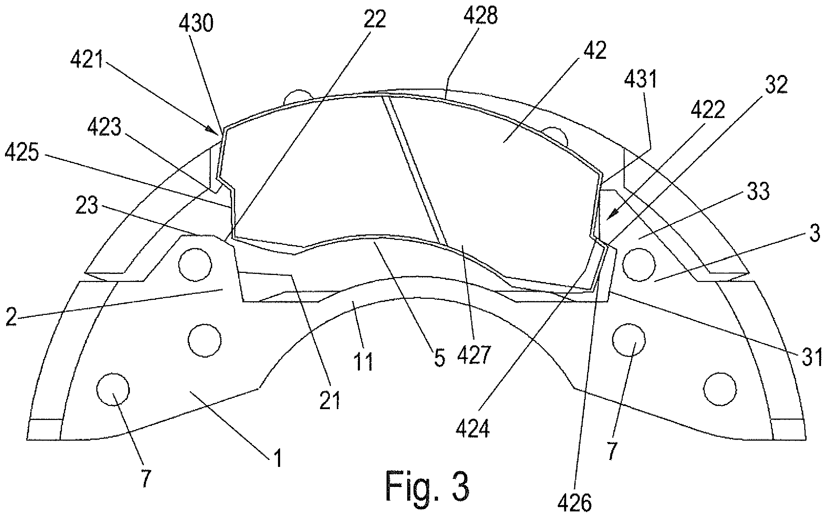

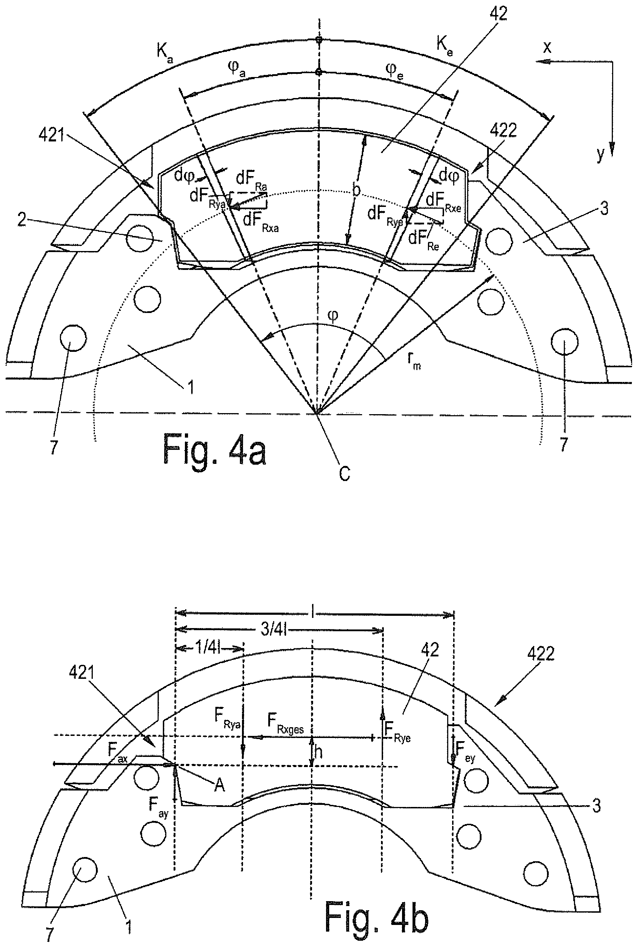

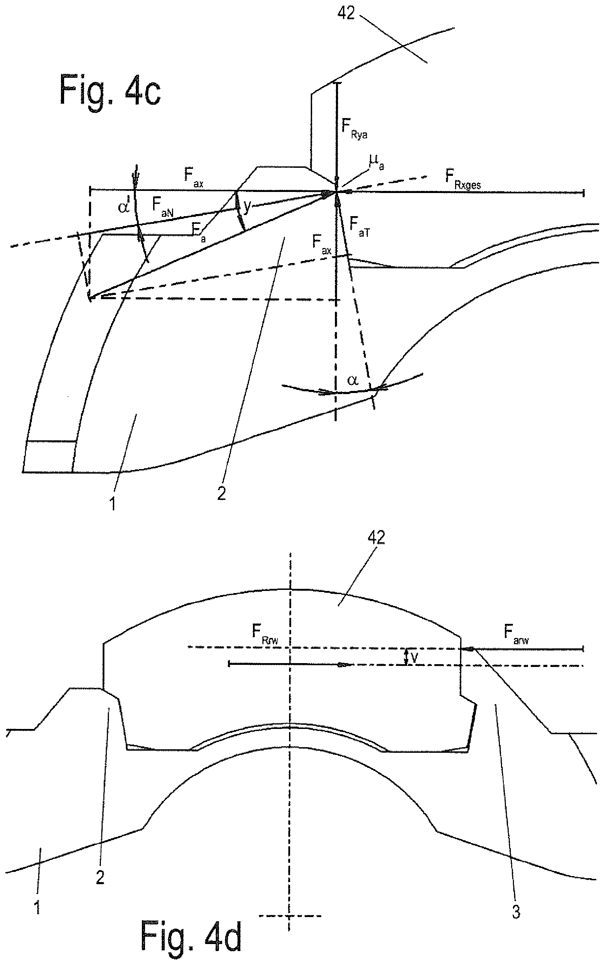

Dies sei anhand einer ersten Modellbetrachtung erläutert. Vereinfacht kann zur Beschreibung des Belages ein Modell eines in Umfangsrichtung kurzen Ringsegmentes angenommen werden (d.h., der Überdeckungswinkel φ in Umfangsrichtung wird vereinfacht als relativ gering angenommen), für dass es eine Kraftwirkungslinie bzw. einen Kraftwirkungsvektor gibt, der durch den Schwerpunkt des Bremsbelages in X-Richtung (senkrecht zur Bremsscheibendrehachse). Bei den Figuren 2 ff liegt dieser Kraftwirkungsvektor bei den in den Figuren dargestellten Varianten radial genau oder etwa in der Mitte und in Umfangsrichtung in der Mitte oder etwa in der Mitte des Bremsbelages. Die auslaufseitige Abstützung am Bremsträger findet dagegen- siehe hierzu auch Fig. 3 und 4 und die weiteren anliegenden Darstellungen außer Fig. 1 - in Y-Richtung senkrecht zur Bremsscheibenachse relativ zum am Schwerpunkt ansetzenden Kraftwirkungsvektor vorzugsweise und vorteilhaft weiter innen zur Drehachse hin statt. Das gilt auch für die Figuren, in welchen kein Bremsträger mit eingezeichnet ist.

Die höchste Abstützstelle A des Bremsbelags am auslaufseitigen Trägerhorn in Y-Richtung weist besonders bevorzugt einen Abstand h von der Kraftwirkungslinie auf, der mindestens 0,1 mal der Länge des Bremsbelags in Richtung der Kraftwirkungslinie der Gesamtreibungskraft und/oder zwischen 0,1 und 0,25 mal der Breite des Bremsbelags senkrecht zur Richtung der Kraftwirkungslinie der Gesamtreibungskraft beträgt. Derart ist die Krafteinleitung und -verteilung auch einlaufseitig vorteilhaft, was weiter unten noch detaillierter erläutert wird.

Besonders vorteilhaft für ist es außerdem nach einer Weiterbildung des Anspruchs 1, wenn das auslaufseitige Trägerhorn und die zugeordnete Kontur der Belagträgerplatte jeweils wenigstens im Bereich der radial höchsten Abstützstelle eine relativ zur Y-Achse um einen Neigungswinkel $\alpha$ > 0° geneigte Abstützfläche aufweisen, wobei diese Abstützflächen zur Anlage aneinander bei Bremsungen in Hauptfahrtrichtung bestimmt sind. Vorzugsweise weist entsprechend die Anlagekontur der Belagträgerplatte eine insgesamt, bereichsweise oder zumindest im radial höchsten Bereich der Belagabstützung am Bremsträger um einen Neigungswinkel ($\alpha$) > 0° zur Y-Achse geneigte Abstützfläche auf.

Um ein durch die Schrägstellung der höchsten Abstützstelle A bedingtes tangentiales Weggleiten des Bremsbelags zu verhindern, ist der Neigungswinkel dabei bevorzugt kleiner ist als die Summe eines Krafteinleitungswinkel und dem Arcus Tangens eines Reibungswertes $\mu_a$ an der Abstützstelle am auslaufseitigen Trägerhorn. Als besonders vorteilhaft haben sich Neigungswinkel $\alpha$ zwischen 8° und 30° herausgestellt. Auch zur Sicherstellung, dass der Belag an der Abstützung des Trägerhorns nicht tangential weggleitet, ergeben sich vorzugsweise für den Winkel $\alpha$ Werte zwischen ca. min. 8° und max. 30°.

Die eben ausgeführten Betrachtungen gelten für Bremsvorgänge in Vorwärtsrichtung. Damit jedoch auch Bremsvorgänge in Rückwärtsrichtung ohne Funktionsbeeinträchtigung möglich sind, muss das in Vorwärtsrichtung einlaufend orientierte Bremsträgerhorn eine Mindesthöhe aufweisen. Eine vorteilhafte Regel hierbei ist, dass die Höhe des Bremsträgerhorns größer sein soll als die Höhelage der in Umfangsrichtung orientierten Wirkungslinie der Belagreibkräfte. Dadurch ist gewährleistet, dass durch die Abstützung des Bremsbelags kein zusätzliches Herausdrehmoment am Bremsbelag erzeugt wird.

Vorteilhafte Ausführungsvarianten der Erfindung sind Gegenstand der weiteren Unteransprüche.

Nach einer vorteilhaften Ausführungsvariante, die einerseits als Weiterbildung des Gegenstandes des Anspruchs 1, andererseits aber auch als eigenständige Erfindung betrachtet werden kann - ist das auslaufseitige Trägerhorn des Bremsträgers gegenüber dem einlaufseitigen Trägerhorn des Bremsträgers abgesenkt ausgebildet. Dies bezieht sich insbesondere auf die radiale Entfernung zur Drehachse (Z-Achse) der Bremsscheibe. Das gegenüber dem auslaufseitigen Trägerhorn radial erhöht ausgebildete einlaufseitige Trägerhorn gewährleistet insbesondere eine zuverlässige Halterung und Verhinderung eines einlaufseitigen Herausdrehens des Bremsbelags aus dem Bremsträger.

Insbesondere ist das einlaufseitige Trägerhorn höher als ein Schnittpunkt der Kraftwirkungslinie mit dem einlaufseitigen Trägerhorn, was den Halt des Bremsbelags auch bei einer Rückwärtsfahrt verbessert.

Gemäß einer weiteren Ausführungsvariante sind das auslaufseitige Trägerhorn des Bremsträgers und die diesem benachbarte Stützfläche der Belagträgerplatte derart geformt, dass die Belagträgerplatte auslaufseitig aus dem Bremsträger radial von der Drehachse der Bremsscheibe weg heraus schwenkbar ist. Dadurch ist gleichzeitig bei konstruktiver Ausgestaltung von Bremsträger und Belagträgerplatte zur Verhinderung einer Drehbewegung des Bremsbelags ein einfaches Ein- und Ausbauen des Bremsbelags ermöglicht. Der Ein- und Ausbau des Bremsbelags in dem Bremsträger kann hier in einfacher Weise durch eine Schwenkbewegung erfolgen.

Die dem einlaufseitigen Trägerhorn des Bremsträgers benachbarte Stützfläche der Belagträgerplatte weist gemäß einer vorteilhaften Ausführungsvariante einen Versatz auf, der in eine dem Versatz entsprechende Hinterschneidung am einlaufseitigen Trägerhorn eingreift. Dadurch ist die Verhinderung eines einlaufseitiges Herausdrehen des Bremsbelags nicht nur durch das Vorhandensein hinreichender Reibungskräfte, sondern durch die Formgestalt der Belagträgerplatte und des einlaufseitigen Trägerhorns bewirkt, wodurch auch die Umverteilung größerer Abstützkräfte an der Einlaufseite ermöglicht sind. Besonders vorteilhaft ist hier ein formschlüssiges Ineinandergreifen des Versatzes in die Hinterschneidung am einlaufseitigen Trägerhorn, beispielsweise dadurch, dass das einlaufseitige Trägerhorn ein Kopfstück aufweist, das den Versatz an der dem einlaufseitigen Trägerhorn benachbarten Stützfläche der Belagträgerplatte übergreift.

Des Weiteren weist die dem auslaufseitigen Trägerhorn des Bremsträgers benachbarte Stützfläche der Belagträgerplatte einen das Trägerhorn zumindest teilweise übergreifenden Versatz auf, um eine möglichst große Auflagefläche zur Ableitung der an dem auslaufseitigen Trägerhorn auftretenden Kräfte zu schaffen.

Gemäß einer weiteren bevorzugten Ausführungsvariante ist die Belagträgerplatte durch die Ausbildung der jeweiligen Versätze asymmetrisch zu einer den Bremsbelag mittig durchschneidenden und durch die Drehachse der Bremsscheibe verlaufenden Spiegelachse geformt. Auch dadurch ergeben sich mehrere Vorteile. So wird durch die einlaufseitige, in radialer Richtung wirkende Führung des Bremsbelags ein Dreheffekt des Bremsbelags während eines Bremsvorgangs verhindert. Des Weiteren besteht durch die Asymmetrie die Möglichkeit einer asymmetrischen Anordnung der Reibmasse des Bremsbelags, beispielsweise zur Kompensation von Schrägverschleiß der Reibmasse. Außerdem ist durch die asymmetrische Gestaltung ein Falscheinbau des Bremsbelags in den Bremsträger quasi ausgeschlossen. So erstreckt sich die Hinterschneidung vorzugsweise als Vorsprung in Richtung der Hauptdrehrichtung der Bremsscheibe und wird von der Belagträgerplatte einlaufseitig untergriffen, derart, dass der Bremsbelag nicht direkt radial relativ zum Bremsscheibenmittelpunkt aus dem Bremsträger entnehmbar ist.

Vorteilhaft für einen einfachen Ein- und Ausbau des Bremsbelags ist es, wenn der Bremsbelag derart in dem Bremsträger gehalten, dass beim Ein- und Ausbau eine Schwenkbewegung oder eine kombinierte Schwenk- und Radialbewegung erforderlich ist. Besonders vorteilhaft und einfach sind der Ein- und Ausbau des Bremsbelags, wenn der Versatz der dem einlaufseitigen Trägerhorn des Bremsträgers benachbarten Stützfläche der Belagträgerplatte und/oder das auslaufseitige Trägerhorn des Bremsträgers und die diesem benachbarte Stützfläche der Belagträgerplatte derart geformt ist, dass der Bremsbelag um eine zur Drehachse der Bremsscheibe parallele Schwenkachse entgegen der Hauptdrehrichtung der Bremsscheibe verschwenkbar ist.

Es ist auch vorteilhaft für den einfachen Ein- und Ausbau des Bremsbelags, wenn die Schwenkachse, um die der Bremsbelag verschwenkbar ist, im Bereich der dem einlaufseitigen Trägerhorn des Bremsträgers benachbarten Stützfläche der Belagträgerplatte nahe einem Kopfbereich des einlaufseitigen Trägerhorns liegt.

Eine direkte Kraftübertragung des Bremsbelags auf den Bremsträger wird insbesondere auch durch ein spielfreies oder nahezu spielfreies Einliegen der Belagträgerplatte in dem Bremsträger gefördert.

Vorteilhaft insbesondere für die Kraftübertragung bei Abbremsvorgängen einer Rückwärtsbewegung ist es, wenn die Länge der den Bremsbelag seitlich teilweise einfassenden Stützfläche des einlaufseitigen Trägerhorns mehr als die Hälfte der Höhe $h_B$ der Belagträgerplatte beträgt.

Die oben genannten Vorteile hinsichtlich der erfindungsbemäßen Scheibenbremse gelten sinngemäß auch für den erfindungsgemäßen Bremsbelag gemäß den Ansprüchen 23 bis 34.

Nachfolgend werden Ausführungsbeispiele der Erfindung anhand der beiliegenden Zeichnungen näher erläutert.

Es zeigen:

Figur 1              eine Seitendraufsicht auf einen in einem Bremsträger gehaltenen Bremsbelag gemäß dem Stand der Technik,

Figur 2              eine Seitenansicht einer ersten Ausführungsvariante eines erfindungsgemäßen Bremsträgers mit darin eingebautem Bremsbelag,

Figur 3              eine Seitenansicht des Bremsträgers und des Bremsbelags aus Figur 2 mit zur Montage oder Demontage verschwenktem Bremsbelag,

Figuren 4a bis 4d    eine Seitenansicht des Bremsträgers und des Bremsbelags aus Figur 2 mit schematischer Darstellung der Bremsscheibe und auf verschiedene Punkte des Bremsträgers bzw. des Bremsbelags wirkende Kräfte,

Figur 5              eine Draufsicht auf den Bremsträger und den Bremsbelag aus Figur 2 mit Darstellung der an verschiedenen Punkten angreifenden Kräfte,

Figuren 6a bis 6e    unterschiedliche Ausführungsvarianten der Formgestaltung eines erfindungsgemäßen Bremsbelags,

Figur 7    eine perspektivische Ansicht einer zweiten Ausführungsvariante einer erfindungsgemäßen Scheibenbremse,

Figur 8    eine perspektivische Ansicht des Bremsträgers der in Figur 7 gezeigten Ausführungsvariante der Scheibenbremse,

Figur 9    eine perspektivische Ansicht des Bremsbelags der in Figur 7 gezeigten Ausführungsvariante der Scheibenbremse,

Figuren 10a bis c    unterschiedliche Ausführungsvarianten der Formgestaltung des Reibbelags eines erfindungsgemäßen Bremsbelags und

Figuren 11 und 12    weitere Seitenansichten von Ausführungsvarianten eines erfindungsgemäßen Bremsträgers mit darin eingebautem Bremsbelag.

In der nachfolgenden Figurenbeschreibung beziehen sich Begriffe wie oben, unten, links, rechts, vorne, hinten usw. im Wesentlichen auf die in den jeweiligen Figuren gewählte beispielhafte Darstellung und Position der Scheibenbremse, der Belagträgerplatte und des Bremsträgers nach den Figuren. In anderer Einbaulage bewegt sich das zur Beschreibung verwendete Koordinatensystem mit.

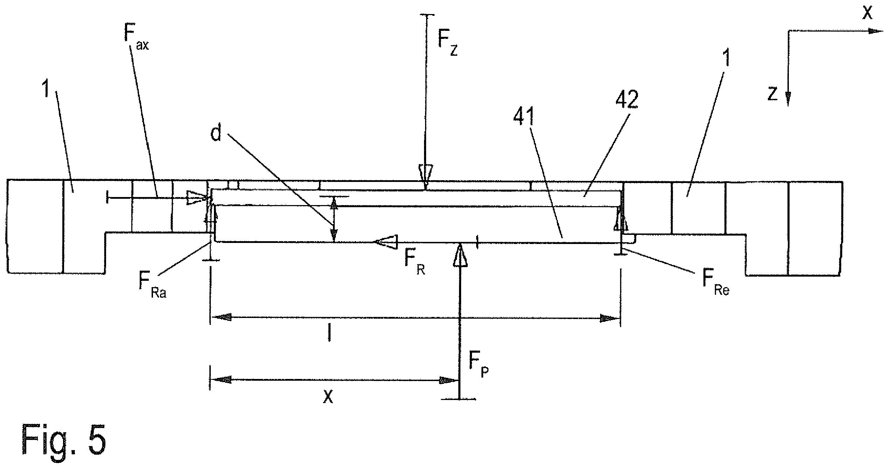

In einem kartesischen Koordinatensystem liegt die Z-Achse parallel zur Bremsscheiben-Drehachse (bei C, siehe Fig. 4a und 5), die X- Achse verläuft senkrecht zur Bremsscheibendrehachse (bei C, siehe Fig. 4a) durch die Bremsscheibendrehachse oder parallel zu dieser Geraden und die Y-Achse verläuft senkrecht zur X-Achse und zur Z-Achse. Die Y-Achse verläuft ferner vorzugsweise durch den Schwerpunkt des Bremsbelages etwa in der Mitte des Belagschachtes (in Umfangsrichtung)

In der Figur 2 ist in schematischer Darstellung ein Ausschnitt einer Scheibenbremse gezeigt. Mit dem Bezugszeichen 42 ist dabei ein Belagträger eines Bremsbelags 4 bezeichnet, auf dessen in Figur 2 nicht zu sehender Rückseite ein Reibbelag 41 (zu erkennen in den Figuren 5, 7 oder 10) festgelegt ist. Der Belagträger 42 des Bremsbelags 4 ist an einem fahrzeugseitig ortsfest montierten Bremsträger 1 montiert und wird bremssattelseitig mit Hilfe eines Belaghaltebügels 6 in dem Bremsträger 1 gehalten.

Der Bremsträger 1 kann dabei als separates Bauteil, wie hier gezeigt, oder als integraler Bestandteil eines Bremssattels 8 ausgebildet sein. Zur Befestigung des Bremsträgers 1 an einer Fahrzeugachse ist dieser üblicherweise mit Bohrungen 7 versehen, in die Schrauben oder Bolzen einführbar sind und den Bremsträger an der Fahrzeugachse halten. Denkbar ist auch ein sonstiges Abstützelement zur Halterung und/oder Abstützung des Bremsbelags 4.

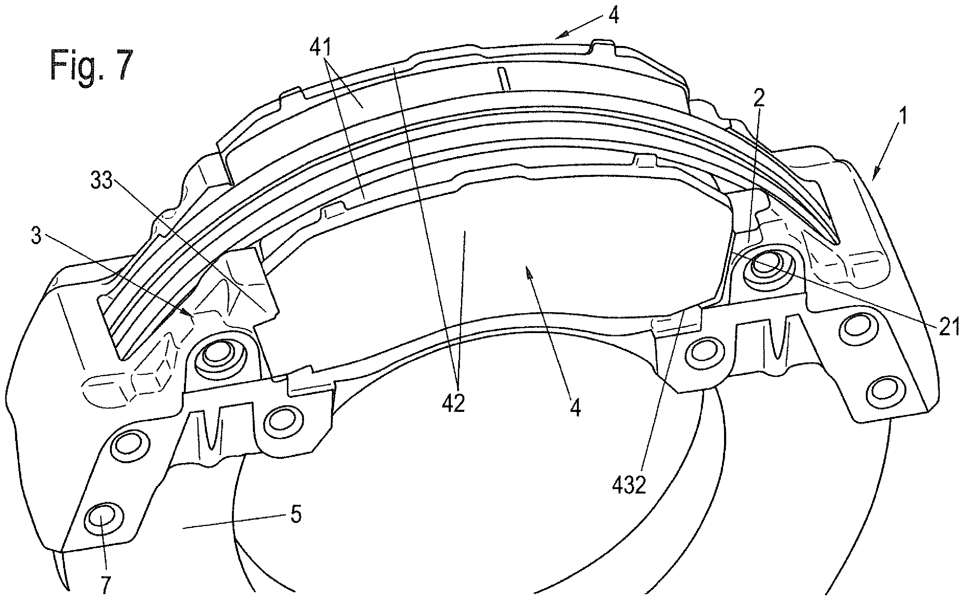

Der Bremsträger 1 überspannt bzw. umgreift , wie in den Figuren 4a, b und 7 gezeigt ist, rahmenartig einen radial äußeren Abschnitt der Bremsscheibe 5 und besteht im Wesentlichen aus zwei durch Brückenteile 11 miteinander verbundenen und in einer Ebene parallel zur Bremsfläche der Bremsscheibe 5 hintereinander angeordneten Trägerhörnern 2, 3, welche die Belagträgerplatte 42 des Bremsbelags 4 seitlich, d.h. einlaufseitig und auslaufseitig stützen.

Der in Figur 7 gezeigte Bremsträger 1 überspannt die Bremsscheibe sowohl aktions- als auch reaktionsseitig. Denkbar ist auch eine Ausführungsvariante des Bremsträgers zur Halterung nur des aktionsseitigen oder nur des reaktionsseitigen Bremsbelags. Der auf der anderen Seite der Bremsscheibe 5 angeordnete Bremsbelag 4 ist bei dieser alternativen Ausführungsvariante vorzugsweise direkt im Bremssattel 8 gehalten. Der Bremssattel 8 ist vorzugsweise ein am Bremsträger verschiebbar angeordneter Bremssattel.

Die Belagträgerplatte 42 des Bremsbelags 4 liegt dabei im eingesetzten Zustand spielfrei oder nahezu spielfrei in dem durch die Trägerhörner 2, 3 und das diese verbindende Brückenteil 11 gebildeten, radial nach außen teilweise offenen Belagschacht des Bremsträger 1 ein.

Dabei ist das einlaufseitige Trägerhorn 3 des Bremsträgers 1 im Gegensatz zu den Scheibenbremsen gemäß dem Stand der Technik, wie es in einem Beispiel in Figur 1 gezeigt ist, nicht als Träger 102 mit einer dem Bremsbelag zugewandten geradlinigen Stützfläche 104 ausgebildet, sondern weist eine Hinterschneidung 32 auf, die einen Versatz 424 an der dem einlaufseitigen Trägerhorn 3 des Bremsträgers 1 benachbarten Stützfläche 422 der Belagträgerplatte 42 aufnimmt.

Die Hinterschneidung 32 und der Versatz 424 an der dem einlaufseitigen Trägerhorn 3 des Bremsträgers 1 benachbarten Stützfläche 422 der Belagträgerplatte 42 sind dabei derart geformt, dass der Bremsbelag 4 um eine zur Drehachse C der Bremsscheibe 5 (gezeigt in Figur 4a) parallele Schwenkachse entgegen einer Hauptdrehrichtung HDR der Bremsscheibe 5 verschwenkbar ist.

Die Hinterschneidung 32 erstreckt sich dabei als Vorsprung in Richtung der Hauptdrehrichtung HDR der Bremsscheibe 5 und wird von der Belagträgerplatte 42, insbesondere dem oben genannten Versatz 424 an der Einlaufseite untergriffen, dass der Bremsbelag 4 nicht direkt radial relativ zum Bremsscheibenmittelpunkt C aus dem Bremsträger 1 entnehmbar ist.

Das auslaufseitige Trägerhorn 2 des Bremsträgers 1 und die diesem benachbarte Stützfläche 41 der Belagträgerplatte 42 sind entsprechend so geformt, dass der Bremsbelag 4 um die zur Drehachse C der Bremsscheibe 5 parallele Schwenkachse entgegen der Hauptdrehrichtung HDR der Bremsscheibe 5 verschwenkbar ist. Demgemäß wird der Bremsbelag 4 derart in dem Bremsträger 1 gehalten, dass beim Ein- und Ausbau eine Schwenkbewegung oder eine kombinierte Schwenk- und Radialbewegung erforderlich ist, wobei die Radialbewegung beim Ausbau des Bremsbelags 4 nach dem Herausschwenken des Bremsbelags 4 aus der Hinterschneidung 32 bzw. bei Einbau des Bremsbelags 4 vor dem Einschwenken des Bremsbelags 4 in die Hinterschneidung 32 des einlaufseitigen Trägerhorns 3 erfolgt. Dadurch ist ein einfacher Ein- und Ausbau des Bremsbelags 4 aus dem bzw. in den Bremsträger 1 gewährleistet.

Wie in Figur 2 zu erkennen ist, weist die dem auslaufseitigen Trägerhorn 2 des Bremsträgers 1 benachbarte Stützfläche 41 der Belagträgerplatte 42 dazu einen das Trägerhorn 2 zumindest teilweise übergreifenden Versatz 43 auf. Die Anordnung und Ausgestaltung der Versätze 43, 44 der Belagträgerplatte 42 mit dem daran angeordneten Reibbelag 41 sowie der Hinterschneidung 32 des Bremsträgers 1 ist dabei dergestalt, dass sowohl die Belagträgerplatte 42 als auch der Bremsträgers 1 bevorzugt eine asymmetrische Gestalt annehmen, welche sowohl vorteilhaft ist für den Ein- und Ausbau des Bremsbelags als auch zur verbesserten Abstützung des Bremsbelags bzw. der Belagträgerplatte 42 an dem Bremsträger 1.

Die Schwenkachse, um die der Bremsbelag 4 verschwenkbar ist, liegt dabei bevorzugt im Bereich der dem einlaufseitigen Trägerhorn 3 des Bremsträgers 1 benachbarten Stützfläche 422 der Belagträgerplatte 42 nahe zu einem Kopfbereich 33 des einlaufseitigen Trägerhorns 3, vorzugsweise innerhalb von 20mm (<=20 mm) nahe zu dem Kopfbereich 33 des einlaufseitigen Trägerhorns 3.

Bei den Bremsträgern und Belagträgerplatten gemäß dem Stand der Technik ist der Bremsträger 100 (gezeigt in Figur 1) mit jeweiligen einlaufseitigen und auslaufseitigen die Belagträgerplatte 105 stützende Trägerhörner 101, 102 ausgebildet. Zum Ein- oder Ausbau der Belagträgerplatte 105 wird diese senkrecht in die Lücke zwischen den beiden Trägerhörnern 101, 102 eingeschoben, wobei die Trägerhörner 101, 102 sich bis zum radial außen liegenden Rand oder nahezu bis zum Rand des Belaghalteträgers 105 erstrecken. Dabei sind sowohl die Innenflächen der Trägerhörner 101, 102 als auch die diesen benachbarten Stützflächen 103, 104 der Trägerplatte 105 als ebene Flächen ausgebildet. Insbesondere das auslaufseitige Trägerhorn 101 muss dabei eine hohe Konzentration am oberen Ende verkraften, was mit einer sehr hohen Beanspruchung und Verformung des Trägerhorns sowie mit einer ungünstigen Kraftverteilung im Bremsträger 100 und dem Belaghalteträger 105 des Bremsbelags einhergeht.

Demgegenüber ist, wie in den Figuren 2, 3 und 4a bis 4d gezeigt ist, insbesondere das auslaufseitige Trägerhorn 2 abgesenkt bzw. flacher ausgebildet, so dass sich ein oberer Abstützpunkt A des Belaghalteträgers 42 am auslaufseitigen Trägerhorn 2 nicht am oberen Ende der Stützfläche 421, sondern radial unterhalb einer die auf den Bremsbelag 4 wirkenden Gesamtreibungskraft darstellende Kraftwirkungslinie $F_{Rxges}$ liegt, wie insbesondere in Figur 4b gezeigt ist. Diese Kraftwirkungslinie $F_{Rxges}$ liegt dabei radial auf Höhe des Schwerpunktes des Bremsbelags. Am Bremsbelag liegt dieser Abstützpunkt dabei etwa in der Mitte oder unterhalb der Mitte der Stützfläche 421. Dadurch greift bei einem Bremsvorgang am Belaghalteträger 42 des Bremsbelags 4 ein definiertes Drehmoment um die Z-Achse an. Durch dieses Drehmoment wird auch am einlaufseitigen Trägerhorn 3 eine auf die Hinterschneidung 32 und den Versatz 424 wirkende Abstützkraft erzeugt und somit auch die Einlaufseite des Bremsträgers 1 in den Kraftfluss während eines Bremsvorgangs mit einbezogen.

Das auslaufseitige Trägerhorn 2 und das einlaufseitige Trägerhorn 3 weisen am Fuß des jeweiligen Trägerhorns eine Stützfläche 21, 31 auf, welche parallel zueinander oder bevorzugt, wie in Figur 2 dargestellt, unter spitzem Winkel gegenüber einer zur y-Achse des weiter unten definierten Koordinatensystems parallelen Geraden auseinander laufen.

Die Länge dieser den Belaghalteträger 4 seitlich teilweise einfassenden Stützflächen 21, 31 beträgt dabei vorzugsweise etwa die Hälfte oder weniger als die Höhe $h_B$ der Belagträgerplatte 42, um zum einen das Einschwenken bzw. Ausschwenken der Belagträgerplatte 42 in den bzw. aus dem Bremsträger 1 zu ermöglichen und zum anderen das am auslaufseitigen Trägerhorn 2 während eines Bremsvorgangs angreifende Drehmoment möglichst klein zu halten.

Oberhalb der Stützfläche 21 des auslaufseitigen Trägerhorns 2 kippt die Stützfläche 21 von der Belagträgerplatte 42 weg zu einer Schrägfläche 22, entsprechend der Ausgestaltung des Versatzes 43 an der Stützfläche 41 der Belagträgerplatte 4.

Oberhalb der Stützfläche 31 des einlaufseitigen Trägerhorns 3 kippt die Stützfläche von der Belagträgerplatte 42 unter Ausbildung der Hinterschneidung 32 nach innen weg, entsprechend der Ausgestaltung des Versatzes 44 an der einlaufseitigen Stützfläche 42 der Belagträgerplatte 4.

Aus Figur 3 wird die besonders einfache Montage bzw. Demontage des Belages mit der der Belagträgerplatte 42 in den oder aus dem Bremsträger 1 gezeigt. Wie hier gut zu erkennen ist, kann durch eine einfache Schwenkbewegung die Belagträgerplatte 42 aus dem Eingriff mit der Hinterschneidung 32 am Kopf 33 des einlaufseitigen Trägerhorns 3 gebracht werden.

In den Figuren 4a bis 4d sind zusätzlich zu den Bauteilen Kräfte darstellende Pfeile der an verschiedenen Punkten der Bauteile angreifenden Kräfte dargestellt. Mit C ist hier die Drehachse der Bremsscheibe 5 bezeichnet, welche gleichzeitig als Z-Achse eines kartesischen Koordinatensystems definiert ist. Als X-Achse und Y-Achse dieses Koordinatensystems dient die waagerecht gestrichelte Linie (X-Achse) und die senkrechte gestrichelte Linie (Y-Achse), welche sich in C orthogonal kreuzen.

Betrachtet man die Kräfte am Bremsbelag 4 in der Ebene genauer und nimmt insbesondere nicht mehr vereinfacht einen kurzen sondern einen Überdeckungswinkel φ des Belages in Umfangsrichtung an, der etwas größer ist (un der vorzugsweise in der radialen Mitte betrachtet größer als 25°, besonders bevorzugt größer als 35° ist), so gilt (siehe Fig. 4a):.

Für die einlaufseitige Belaghälfte:

In x-Richtung (betrachtet in einem kartesischen Koordinatensystem mit a) der Scheibendrehachse als Z-Achse, b) einer hierzu senkrechten Y-Achse, welche die Z-Achse kreuzt; und c) mit einer die Y-Achse senkrecht kreuzenden, nicht aber die Z-Achse kreuzenden X-Achse) :

$$dF_{Rxe} = p \cdot b \cdot r_m \cdot \mu \cdot \cos\varphi \cdot d\varphi$$

$$F_{Rxe} = \int_0^\kappa p \cdot b \cdot r_m \cdot \mu \cdot \cos\varphi \cdot d\varphi$$

$$F_{Rxe} = \left[ p \cdot b \cdot r_m \cdot \mu \cdot \sin\varphi \right]_0^\kappa$$

$$\underline{\underline{F_{Rxe} = p \cdot b \cdot r_m \cdot \mu \cdot (\sin\kappa - \sin 0)}}$$

, wobei

| | | |
|---|---|---|
| p: | Flächenpressung Bremsbelag | |
| b: | Belagbreite | |
| $r_m$: | Reibradius | |
| μ: | Belagreibwert | |
| φ: | überstrichener Winkel in Einlauf- bzw. Auslaufrichtung | |
| κ: | überstrichener Winkel in Einlauf- bzw. Auslaufrichtung am Berührungspunkt des ein- bzw. auslaufseitigen Trägerhorns | |
| $F_{Rxe}$: | Belagreibkraftkomponente in x-Richtung einlaufende Belagseite | |

Der Reibradius $r_m$ wird als in radialer Richtung in der Mitte der Bremsscheibe bzw. des Bremsbelages liegend angenommen.

Die in x-Richtung wirkenden Belagreibkräfte müssen vom auslaufseitigen Bremsträgerhorn 2 aufgenommen werden.

In y-Richtung:

$$dF_{Rye} = p \cdot b \cdot r_m \cdot \mu \cdot \sin\varphi \cdot d\varphi$$

$$F_{Rye} = \int_0^\kappa p \cdot b \cdot r_m \cdot \mu \cdot \sin\varphi \cdot d\varphi$$

$$F_{Rye} = \left[- p \cdot b \cdot r_m \cdot \mu \cdot \cos\varphi\right]_0^\kappa$$

$$\underline{\underline{F_{Rye} = p \cdot b \cdot r_m \cdot \mu \cdot \left(\cos 0 - \cos \kappa\right)}}$$

mit

$F_{Rye}$: Belagreibkraftkomponente in y-Richtung einlaufende Belagseite

Die in y-Richtung wirkenden Belagreibkräfte bewirken ein Herausziehen des Bremsbelags aus dem Bremsträgerschacht.

Für die auslaufseitige Belaghälfte gilt:

In x-Richtung kann die Beziehung, aufgrund der identischen Kraftwirkungsrichtung, ohne Änderung von der einlaufseitigen Belaghälfte übernommen werden.

In y-Richtung gilt die Beziehung wie oben, jedoch mit geändertem Vorzeichen. Die Kräfte bewirken hier ein Hineindrücken des Bremsbelags in den Bremsträgerschacht.

$$\underline{\underline{F_{Rya} = p \cdot b \cdot r_m \cdot \mu \cdot \left(\cos\kappa - \cos 0\right)}}$$

mit

$F_{Rya}$: Belagreibkraftkomponente in y Richtung auslaufende Belagseite

Aufgrund dieses Sachverhaltes ergibt sich eine unsymmetrische Kraftwirkung am Bremsbelag in y-Richtung.
Die gesamte in x-Richtung wirkende Belagreibkraft ist:

$$\underline{\underline{F_{Rxges} = F_{Rxe} + F_{Rxa}}}$$

mit:

$F_{Rxa}$: Belagreibkraftkomponente in x Richtung auslaufende Belagseite
$F_{Rxges}$: Gesamte Belagreibkraft in x Richtung

Diese Kraft muss allein vom auslaufseitigen Trägerhorn 2 aufgenommen werden.
Betrachtet man nun das Kräfte- und Momentengleichgewicht um die Z-Achse in einem Punkt A am Berührungspunkt des auslaufseitigen Trägerhorns (Fig.4b), ergeben sich mit Einbeziehung der vorher ermittelten Beziehungen folgende Gleichungen:

$$\sum M_{(A)} = 0 = F_{ey} \cdot 1 - F_{Rxges} \cdot h - F_{Rya} \cdot \frac{1}{4} 1 - F_{Rye} \cdot \frac{3}{4} 1$$

$$\sum F_{(x)} = 0 = F_{ax} - F_{Rxges}$$

$$\sum F_{(y)} = 0 = F_{ay} - F_{Rya} - F_{Rye} - F_{ey}$$

mit $F_{Rya}$ = -$F_{Rye}$ folgt :

$$\Rightarrow F_{ey} = F_{Rxges} \cdot h/l + 1/2\, F_{Rye}$$

mit:

$F_{ey}$: Abstützkraft am einlaufenden Trägerhorn in y Richtung
$F_{ay}$: Abstützkraft am auslaufenden Trägerhorn in y Richtung
I: Belaglänge des Bremsbelags 4
h: Abstand der Kraftwirkungslinie zur Abstützstelle (A) am auslaufseitigen Trägerhorn 2

Aus dieser Gleichung geht überraschend hervor, dass durch eine entsprechende Gestaltung des Bremsträgers 1 auch an der Einlaufseite eine Abstützkraft erzeugt werden kann.

Um dies zu erreichen, ist vorteilhaft vorgesehen, den Bremsbelag 4 im Bremsträger 1 einlaufseitig am Herausdrehen zu hindern. Dies kann z.B. durch einen in den Bremsträger 1 eingreifenden Vorsprung am Bremsbelag 4 (siehe Fig. 2) erreicht werden.

Ebenso zeigt diese das Verhältnis h/l enthaltende Gleichung, dass überraschend und vorteilhaft durch eine auslaufseitig radial relativ niedrige radiale Abstützstelle A, insbesondere leicht realisierbar durch eine Absenkung des auslaufenden Trägerhorns 2 relativ zum einlaufenden Trägerhorn, die Abstützkraft am einlaufenden Trägerhorn 3 erhöht werden kann. (h sollte möglichst groß sein; die Abstützstelle A ist insbesondere die in radialer Richtung äußerste/höchste Abstützstelle A).

Durch die beschriebenen Maßnahmen wird eine günstigere Kraftverteilung im Bremsträger 1 erreicht. Konventionelle Bremsträger, ohne einlaufseitige Abstützung des Bremsbelags, haben eine hohe Konzentration der Belagabstützkräfte im auslaufseitigen Trägerhorn.

Die in y-Richtung wirkende belageinlaufseitige Reibkraftkomponente muss bei konventionellen Bremsträgern hauptsächlich über den Reibkontakt zwischen der Belagträgerplatte und dem Bremssattel bzw. den Druckstücken in die Sattellagerung eingeleitet werden. Die belageinlaufseitigen Reibkraftkomponenten führen zu einer hohen Belastung der Sattellagerung. Zur Vermeidung von vorzeitigem Verschleiß bzw. Versagens ist daher eine relativ massive und damit Bauraum beanspruchende Dimensionierung erforderlich.

Ferner besteht die Möglichkeit, dass bei zu geringem Kraftschluss zwischen dem Bremsbelag und dem Bremssattel bzw. den Druckstücken (wie z.B. bei Anwesenheit von Fett oder Öl) es zum Herausdrehen der Bremsbeläge und damit zu einer Fehlfunktion der Bremse kommen kann.

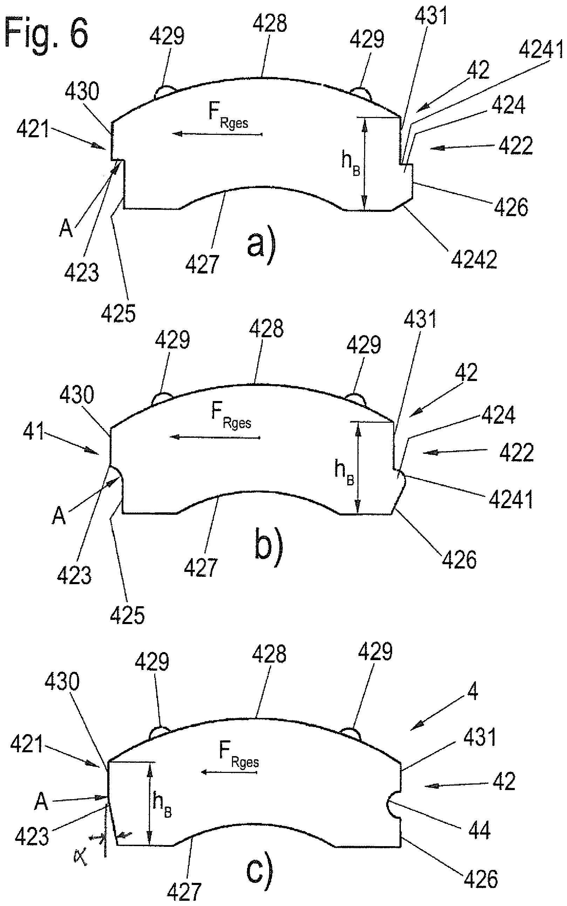

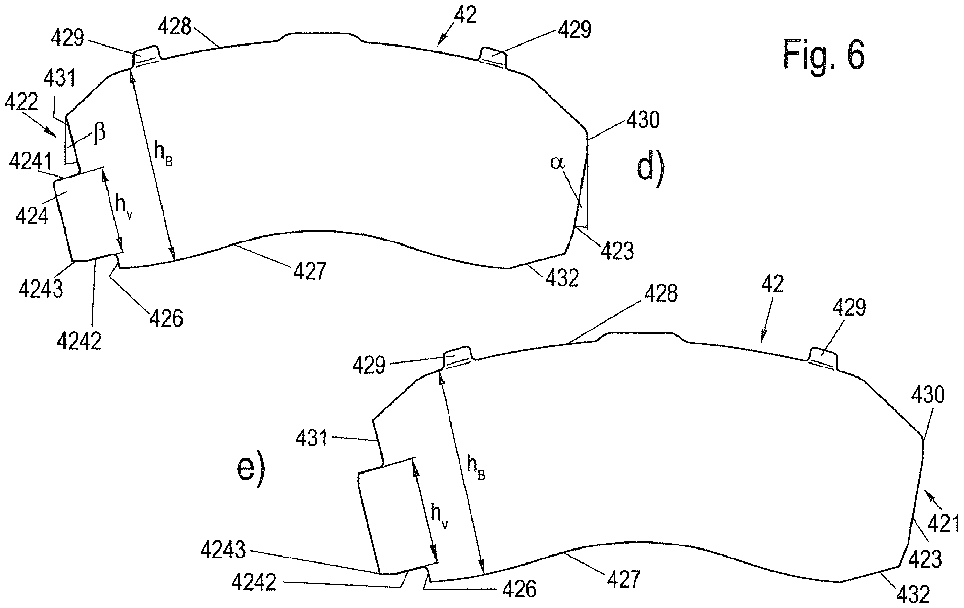

Wie vorher beschrieben, soll der Bremsbelag 4 einlaufseitig im Bremsträger 1 eingehängt werden. Um eine einfache Montage und Demontage zu gewährleisten, soll der Aus- und Einbau deshalb durch eine Schwenkbewegung des Bremsbelags 4 erfolgen. Um dies zu ermöglichen, verfügt das auslaufseitige Trägerhorn 2 und die zugeordnete Kontur des Belagträgers 42 über eine geneigte Abstützfläche, wie in den Figuren 3 und 6 gezeigt ist.

Der Neigungswinkel $\alpha$ des auslaufseitigen Abstützhorns 2 zur Y-Achse kann jedoch nicht beliebig gewählt werden. Zum einen wird die Mindestschrägstellung durch die Ein- und Ausbaubedingungen bestimmt. Zum anderen wird die zulässige Maximalschrägstellung durch die Einhaltung der Selbsthemmungsgrenze vorgegeben. Bei Überschreiten der Selbsthemmungsgrenze würde es zum tangentialen Weggleiten des Bremsbelags 4 kommen. Die Selbsthemmungsgrenze hängt maßgeblich von der Belaggeometrie, von den Reibverhältnissen an der Belagabstützung und der Richtung der Krafteinleitung zwischen Bremsbelag 4 und Bremsträger 1 ab.

Die physikalischen Zusammenhänge sind in Fig 4c dargestellt und durch nachfolgende Gleichungen bestimmt.

Für den Kraftangriffswinkel $\gamma$ gilt:

$$\gamma = \arctan F_{Ray}/F_{Rxges}$$

$$\text{mit } F_a = F_{ax}/\cos\gamma \Rightarrow$$

$$\cos(\alpha - \gamma) = F_{aN}/F_{ax} \cdot \cos\gamma \Rightarrow$$

$$F_{aN} = F_{ax} \cdot \frac{\cos(\alpha - \lambda)}{\cos\gamma}$$

$$\text{mit } F_{aN} = \frac{F_{aR}}{\mu_a}$$

und

$F_{aR} = F_{aT}$ (Bedingung für Selbsthemmung) folgt:

$$\alpha = \gamma + \arctan\mu_a$$

mit:

$\gamma$: Kraftangriffswinkel am auslaufseitigen Trägerhorn 2
$\alpha$: Neigungswinkel der Abstützfläche am auslaufseitigen Trägerhorn 2
$F_a$: gesamte Abstützkraft am auslaufenden Trägerhorn
$F_{aN}$: Normalkraft am auslaufenden Trägerhorn (senkrecht zur Stützfläche)
$F_{aT}$: Tangentialkraft am auslaufenden Trägerhorn (parallel zur Stützfläche)
$\mu_a$: Reibwert an der Belagabstützung am auslaufseitigen Trägerhorn

Obige Gleichung definiert die Selbsthemmungsbedingung für den Neigungswinkel $\alpha$ des auslaufseitigen Trägerhorns 2 in Abhängigkeit des Krafteinleitungswinkels $\gamma$ und der Reibung $\mu_a$ an der Abstützungsstelle.

Zur Sicherstellung, dass der Belag 4 an der Abstützung des Trägerhorns 2 nicht tangential weggleitet, muss der Winkel $\alpha$ deutlich kleiner gewählt werden als mit Hilfe obiger Beziehung berechnet.

Unter Berücksichtigung von realistischen Reibungsbedingungen ($\mu_a$ = 0,1 bis 0,2) am Trägerhorn und der üblichen Abmessungen für Bremsbeläge in schweren Nutzfahrzeugen ergeben sich vorzugsweise für den Winkel $\alpha$ Werte zwischen min. 8° und max. 30°.

Die eben ausgeführten Betrachtungen gelten für Bremsvorgänge in Vorwärtsrichtung. Damit jedoch auch Bremsvorgänge in Rückwärtsrichtung ohne Funktionsbeeinträchtigung möglich sind, muss das in Vorwärtsrichtung einlaufend orientierte Bremsträgerhorn 3 eine Mindesthöhe aufweisen. Hier gilt der Sachverhalt, wie er bei konventionellen Bremsträgern üblich ist. Vorteilhaft ist, wenn die Höhe des Bremsträgerhorns größer sein soll als die radiale Höhelage der in Umfangsrichtung orientierten Wirkungslinie der Belagreibkräfte. Dadurch ist gewährleistet, dass durch die Abstützung des Bremsbelags kein zusätzliches Herausdrehmoment am Bremsbelag erzeugt wird. Das Versatzmaß v der beiden Wirklinien ist in Fig 4d ersichtlich.

Da die Rückwärtsbremsungen bei Straßenfahrzeugen in der Regel deutlich wenig häufig und mit geringerer Kraft durch geführt werden, kann die Belagführung für die Rückwärtsbremsungen ohne Funktionseinschränkung daher im Vergleich zur Vorwärtsbremsung vereinfacht ausgeführt werden.

Aufgrund der vorher geschilderten Anforderungen für Vorwärtsbremsungen und den Anforderung bzgl. des Belagein- und ausbaus sowie den Anforderung hinsichtlich der Belagabstützung bei Rückwärtsbremsungen ergibt sich systembedingt eine asymmetrische Geometrie für den Bremsbelag 4.

Typisch für die asymmetrische Belag- und Bremsträgergeometrie sind ein relativ niedriges Abstützhorn an der auslaufend orientierten Bremsträgerseite, eine Schrägstellung der Belagabstützung des auslaufseitigen Trägerhorns, wobei der Schrägstellungswinkel vorzugsweise 8° <= $\alpha$ <= 30° beträgt, ein Ineinandergreifen zwischen Bremsbelag 4 und Bremsträgerhorn 3 an der einlaufenden Seite des Bremsträgers 1 (z.B. durch einen Vorsprung am Bremsbelag und einem entsprechenden Einzug am Trägerhorn 3) sowie ein relativ hohes Abstützhorn 3 an der einlaufend orientierten Bremsträgerseite

In Fig. 4b werden noch folgende Größen definiert: $F_{ey}$: Reaktionskraft einlaufseitig, l: Belaglänge, $F_R$: Reibkraft des Bremsbelags, h: Abstand der Kraftwirkungslinie zur Belagabstützung; $F_{ax}$: Belagabstützkraft; $F_{ay}$: Reaktionskraft auslaufseitig.

Wichtig ist, dass durch die erfindungsgemäße Formung der Trägerhörner 2, 3 und der Stützfläche 41, 42 der Belagträgerplatte 42 nicht mehr nur das auslaufseitige Trägerhorn 2, sondern auch das einlaufseitige Trägerhorn 3 zur Abstützung der Belagträgerplatte 42 bei einem Bremsvorgang beisteuert.

Betreffend die Kräfte und Momente am Bremsbelag um die Hochachse (y-Achse) bei Verschiebung des Bremsbelags unter Krafteinwirkung in x-Richtung, dargestellt in Figur 5, gelten die folgenden Gleichungen:

$$1. \quad \sum F_{(z)} = 0 = F_{Ra} - F_z + F_P + F_{Re}$$

$$2. \quad \sum F_{(x)} = 0 = F_{ax} - F_R$$

$$3. \quad \sum M_{(A)} = 0 = F_R \cdot d - F_P \cdot x - F_{Re} \cdot l + F_z \cdot \frac{l}{2}$$

$F_Z$: Zuspannkraft
$F_P$: Belaganpresskraft an die Bremsscheibe
$F_{Ra}$: Reibkraft auslaufseitig
$F_{Re}$: Reibkraft einlaufseitig
d: Belagstärke
x: Abstand der Zuspannkraftwirkungslinie

Für die Asymmetrie der Kraftwirkung am Bremsbelag bzw. der Belagträgerplatte 42 gilt somit:

$$x = \frac{F_z \cdot \frac{l}{2} - F_{Re} \cdot l + F_R \cdot d}{F_P}$$

Für $F_{Re} = 0$ (Reibkraft einlaufend) und $F_{Ra} = 0$ (Reibkraft auslaufend) sowie d = 0 (Belagreibkraft und Abstützkraft auf der gleichen Ebene) gilt:

$$F_z = F_P \text{ aus Gl.1}$$

$$x = \frac{F_z \cdot \frac{l}{2}}{F_z} \quad \Rightarrow \quad x = \frac{l}{2}$$

(Idealzustand, da gleichmäßige Kraftverteilung im Belag)

Für einen herkömmlichen Bremsbelag ohne Reibkraft am einlaufseitigen Bremsbelagträgerhorn gilt:

$$x = \frac{F_z \cdot \frac{l}{2} + F_R \cdot d}{F_P}$$

Für einen Bremsbelag 4 mit Reibkraft am einlaufseitigen Bremsträgerhorn 3 gilt die vorher hergeleitete Beziehung:

$$x = \frac{F_z \cdot \frac{l}{2} - F_{Re} \cdot l + F_R \cdot d}{F_P}$$

Ein Bremsträger 1 mit einer Reibkraft am einlaufseitigen Bremsträgerhorn 3 hat somit eine um den Term ($F_{Re}$1) günstigere Kraftverteilung als ein Bremsbelag ohne einlaufseitige Reibkraft.

Durch die Versätze 423, 424 an den Stützflächen 421, 422 der Belagträgerplatte 42 und die Hinterschneidung 32 am einlaufseitigen Trägerhorn 3 kann die Belagträgerplatte 42 spielfrei oder nahezu spielfrei in den Bremsträger 1 eingelegt werden.

Denkbar sind auch weitere in den Figuren 6a bis 6e beispielhaft gezeigte Ausführungsvarianten der Belagträgerplatte 42 und entsprechender Formgestaltungen der Trägerhörner 2, 3 des Bremsträgers 1

So ist in Figur 6a an der Belagträgerplatte jeweils einlaufseitig und auslaufseitig ein rechteckiger Versatzvorsprung mit parallel zur X-Achse verlaufenden Stützflächen 423, 424 angeformt, wobei die einlaufseitige Fläche 4241 des Versatzes 424 an einer entsprechend ausgerichteten Hinterschneidung 32 des einlaufseitigen Trägerhorns 3 sich abstützt und die auslaufseitige Stützfläche 423 auf dem auslaufseitigen Trägerhorn 2 aufliegt.

Bei der in Figur 6b gezeigten Ausführungsvariante sind die Versätzvorsprünge 423, 424 als Rundungen geformt, welche sich an entsprechend geformten Hinterschneidungen des einlaufseitigen Trägerhorns 3 und einer entsprechend geformten Auflagefläche 22 des auslaufseitigen Trägerhorns 2 aufstützt.

Bei der in der Figur 6c gezeigten Ausführungsvariante ist auf der Einlaufseite 422 der Versatz 424 als halbkreisförmige Ausbuchtung geformt. Die Einlaufseite 421 der Belagträgerplatte 42 ist in Form zweier winklig zueinander verlaufender geradliniger Flächen zur Abstützung auf dem auslaufseitigen Trägerhorn 2 geformt.

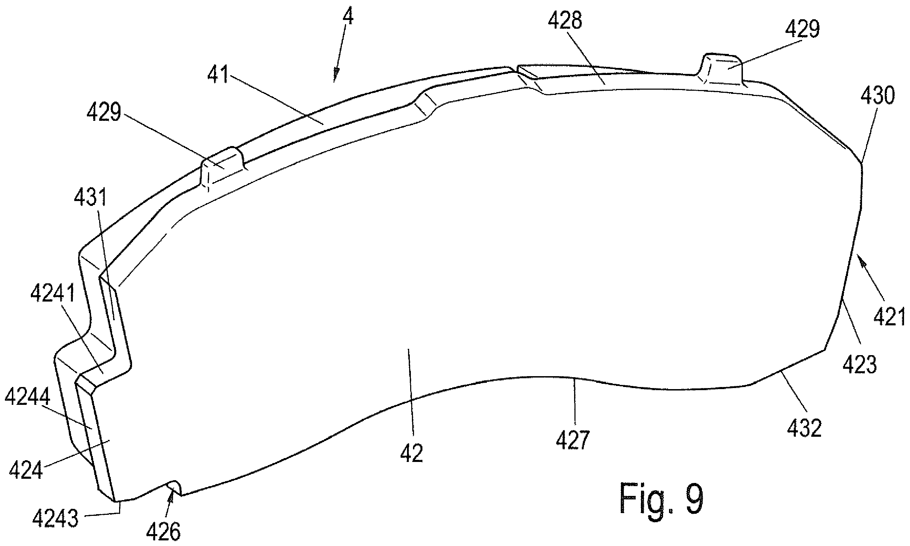

Die in den Figuren 6d, 6e und 9 gezeigte Belagträgerplatte 4 zeichnet sich dadurch aus, dass einlaufseitig ein rechteckiger Versatzvorsprunges 424 an einer unter spitzem Winkel $\beta$ nach außen überhängenden Seitenfläche 422 angeordnet ist, der in eine entsprechend geformte Hinterschneidung 32 des einlaufseitigen Trägerhorns 3 einschwenkbar ist. Dabei ist die Höhe $h_v$ des Versatzes 424 der Figur 6d geringer als die Höhe $h_v$ des Versatzes 424 der Figur 6e. Auslaufseitig ist die Seitenfläche 421 der Belagträgerplatte 4 mittig als nach außen unter spitzem Winkel $\alpha$ überhängende Seitenfläche 423 ausgebildet.

Bevorzugt sind zur besseren Einschwenkbarkeit der Belagträgerplatte 4 in die Hinterschneidung 32 des einlaufseitigen Trägerhorns 3 der an die Oberseite 428 angrenzende Randbereich 430 und der an die Unterseite 427 der Belagträgerplatte 4 angrenzende Randbereich 432 leicht abgeflacht ausgebildet.

Ebenso ist eine (im eingebauten Zustand des Bremsbelags 4) in Richtung der Drehachse der Bremsscheibe 5 weisende Teilfläche 4242 des rechteckigen Versatzes bzw. Versatzvorsprunges 424 mit einer Abplattung 4243 versehen, um die Schwenkbewegung des Bremsbelags 4 aus dem Eingriff mit dem Bremsträger 1 zu erleichtern.

Der Versatz 424 ist dabei gemäß einer bevorzugten Ausführungsvariante einstückig an der Belagträgerplatte 42 angeformt. Alternativ ist auch denkbar, den Versatz 424 an der Belagträgerplatte 42 als separates Bauteil zu befestigen.

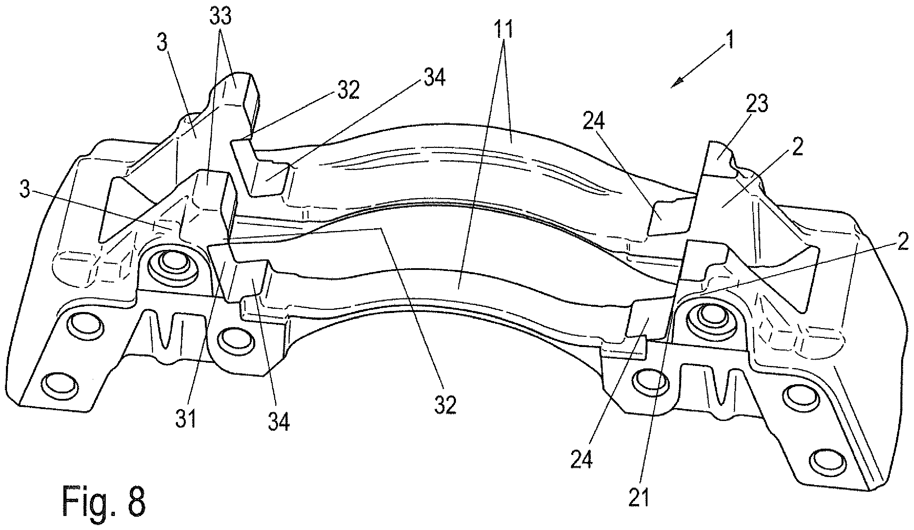

Figur 7 zeigt eine Ausführungsvariante des zu den in den Figuren 6d und 6e gezeigten Bremsbelägen 4 passenden Bremsträgers 1 mit zwei in den Bremsträger 1 eingesetzten Bremsbelägen 4. Der Bremsträger 1 ohne die Bremsbeläge ist in Figur 8 dargestellt. Gut zu erkennen ist die asymmetrische Bauweise der Bremsbeläge und die Ausgestaltung der die Bremsbeläge 4 aufnehmenden Bestandteile des Bremsträgers 1, insbesondere der Kopf 33 des einlaufseitigen Trägerhorns 3 sowie die zueinander v-förmige Spreizung der durch die Trägerhörner 2, 3 gebildeten Bremsbelagschacht des Bremsträgers.

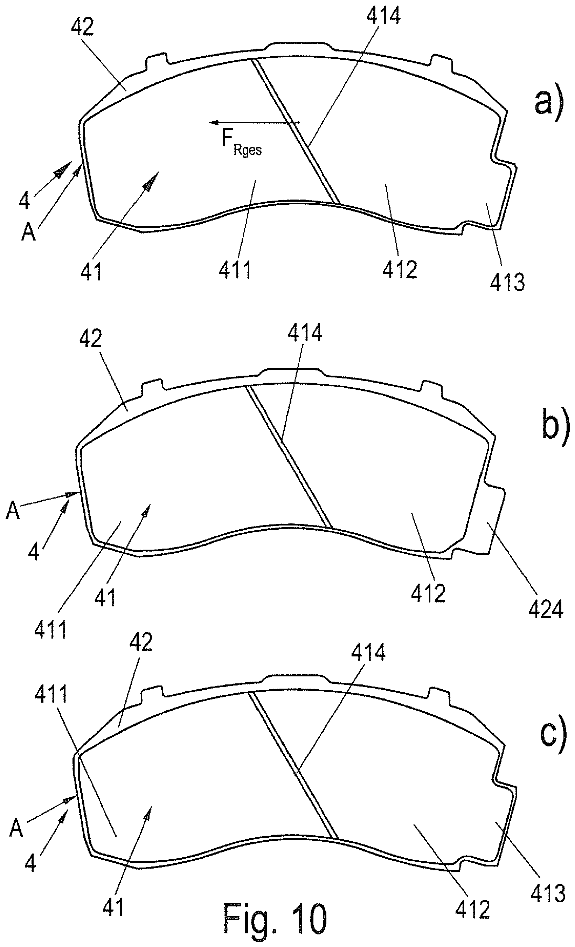

Der an den Bremsbelägen 4 angeordnete Reibbelag 41 ist bevorzugt entsprechend der asymmetrischen Gestaltung der Belagträgerplatte 42 geformt, wie in Figur 10 a und 10c gezeigt ist. Das den Versatz 424 der Belagträgerplatte 42 bedeckende Teilstück 413 des bevorzugt in zwei Teilstücke 411, 412 unterteilten Reibbelags 41 ist dabei vorzugsweise einstückig mit einem der Teilstücke 412 ausgebildet, kann aber auch bei einer Ausführungsvariante des Bremsbelags mit separat ausgebildetem Versatz 424 mit dem Versatz 424 zusammen an den Bremsbelag montiert werden. Denkbar ist auch, an dem Versatz 424 keinen Reibbelag anzubringen, wie es in Figur 10b gezeigt ist.

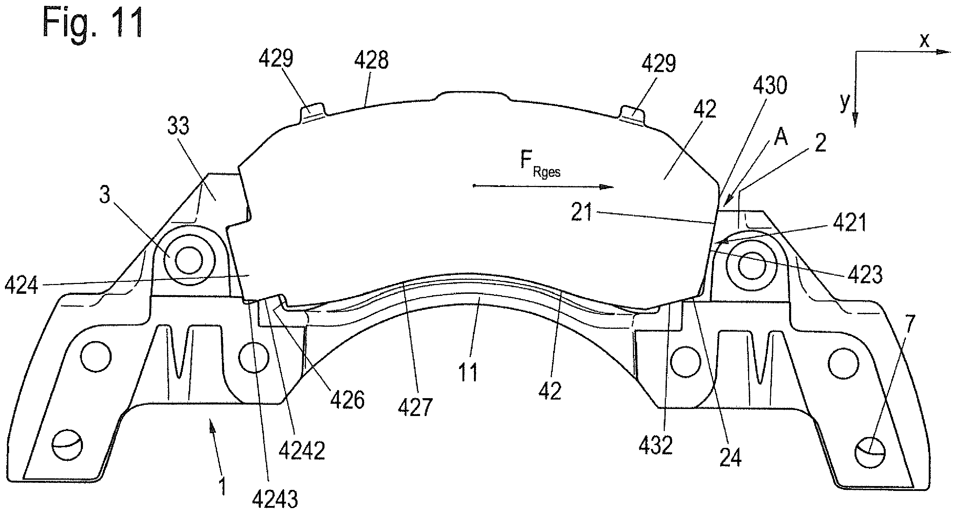

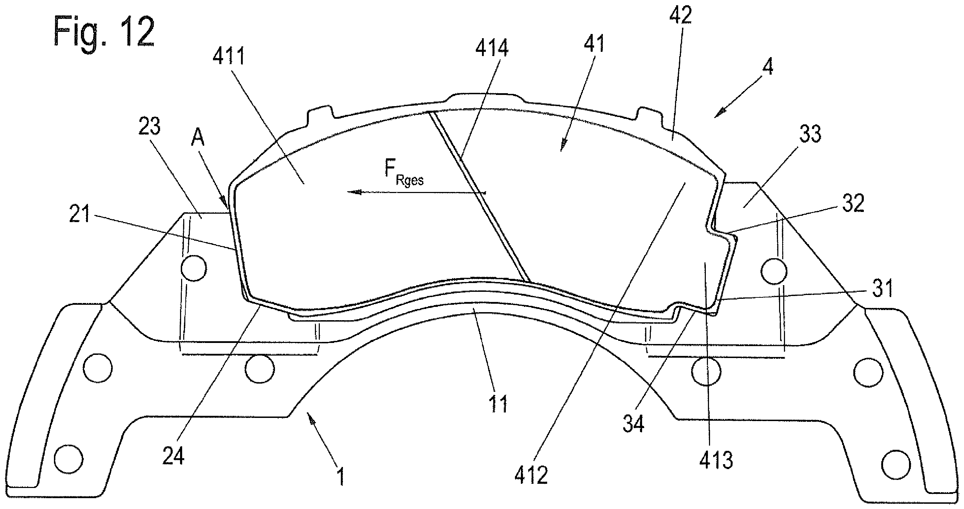

Die Figuren 11 und 12 zeigen Seitendraufsichten des in Figur 7 gezeigten Bremsträgers 1 und des Bremsbelags 4, einmal mit Darstellung der Belagträgerplatte 42 des Bremsbelags (Figur 11) und im anderen Fall mit Darstellung des Reibbelags 41 des Bremsbelags (Figur 12). Gut zu erkennen ist auch hier, dass das auslaufseitige Trägerhorn 2 gegenüber dem einlaufseitigen Trägerhorn 3 des Bremsträgers 1 asymmetrisch zu einer den Bremsbelag 4 mittig durchschneidenden und durch die Drehachse C der Bremsscheibe 5 verlaufenden Spiegelachse ausgebildet ist.

Mit den erfindungsgemäß geformten Belagträgerplatten 4 und Bremsträgern 1 wird somit eine Verbesserung der Kraftverteilung durch eine ein- wie auslaufseitige reibschlüssige Abstützung erreicht. Des Weiteren erfolgt eine gleichmäßigere Einleitung der bei einem Bremsvorgang von dem Bremsbelag 4 in dem Bremsträger 1 übertragenen Kräfte, was mit einer gleichmäßigeren Beanspruchung des Bremsträgers 1 bzw. des Bremssattels und der Befestigungselemente der Bremse an der den Bremsträger 1 tragenden Achse einhergeht. Überdies wird auch eine Verminderung von Klappergeräuschen durch eine engere radiale Führung des Bremsbelags 4 im Bremsträger 1 erreicht.

**Bezugszeichenliste**

| | |
|---|---|
| 1 | Bremsträger |
| 11 | Brückenteil |

| | |
|---|---|
| 2 | Trägerhorn |
| 21 | Stützfläche |
| 22 | Auflagefläche |
| 23 | Oberseite |
| 24 | Stützflache |
| | |
| 3 | Trägerhorn |
| 31 | Stützfläche |
| 32 | Hinterschneidung |
| 33 | Kopf |
| 34 | Stützflache |
| | |
| 4 | Bremsbelag |
| 41 | Reibbelag |
| 42 | Belagträgerplatte |
| 421 | Stützfläche |
| 422 | Stützfläche |
| 423 | Versatz |
| 424 | Versatz |
| 4241 | Oberseite |
| 4242 | Unterseite |
| 4243 | Abflachung |
| 4244 | Seitenfläche |
| 425 | Stützfläche |
| 426 | Stützfläche |
| 427 | Unterkante |
| 428 | Oberkante |
| 429 | Ansatz für Belaghaltefeder |
| 430 | Randbereich |
| 431 | Stützfläche |
| 432 | Stützfläche |
| 5 | Bremsscheibe |
| 6 | Belaghaltebügel |
| 7 | Bohrung |
| 8 | Bremssattel |
| | |
| 100 | Bremsträger |
| 101 | Trägerhorn |
| 102 | Trägerhorn |
| 103 | Stützfläche |
| 104 | Stützfläche |
| 105 | Belagträgerplatte |
| | |
| C | Drehachse, Koordinatenzentrum |
| A | Kraftansatzpunkt |
| HDR | Hauptdrehrichtung der Bremsscheibe |
| $h_B$ | Höhe der Belaghalteplatte |
| $h_{Te}$ | Höhe des einlaufseitigen Trägerhorns |
| $h_{Ta}$ | Höhe des auslaufseitigen Trägerhorns |
| | |
| v: | Versatz der Kraftwirkungslinien bei Rückwärtsbremsung |
| x: | Abstand der Belaganpresskraft zum Belagabstützpunkt |
| $F_R$: | Gesamte Belagreibkraft |
| $F_{Rrw}$: | Belagreibkraft bei Rückwärtsbremsung |
| $F_{arw}$: | Belagabstützkraft bei Rückwärtsbremsung |
| $F_z$: | Zuspannkraft |
| $F_P$: | Belaganpresskraft |
| $F_{Ra}$: | Reibkraft in der Abstützfläche des auslaufseitigen Trägerhorns |

$F_{Re}$:  Reibkraft in der Abstützfläche des einlaufseitigen Trägerhorns

**Patentansprüche**

**1.** Scheibenbremse eines Kraftfahrzeugs, insbesondere eines Nutzfahrzeugs, aufweisend einen eine Bremsscheibe (5) in einem Umfangsbereich abschnittsweise übergreifenden Bremssattel (8) und einen fahrzeugseitig ortsfest festlegbaren Bremsträger (1), in dem mindestens ein mit einer Belagträgerplatte (42) und einem daran befestigten Reibbelag (41) versehener Bremsbelag (4) geführt ist, wobei der Bremsträger (1) in einer Hauptdrehrichtung (HDR) der Bremsscheibe (5) einlaufseitig und auslaufseitig die Belagträgerplatte (42) des Bremsbelags (4) stützende Trägerhörner (2, 3) aufweist, wobei das einlaufseitige Trägerhorn (3) des Bremsträgers (1) und die diesem benachbarte Stützfläche (422) der Belagträgerplatte (42) ineinander greifen wobei der Bremsbelag (4) an einer relativ zur Bremsscheibendrehachse in Y-Richtung höchsten Abstützstelle (A) am auslaufseitigen Trägerhorn (2) abgestützt ist, die relativ zur Bremsscheibendrehachse unterhalb einer die auf den Bremsbelag (4) wirkenden Gesamtreibungskraft darstellenden Kraftwirkungslinie ($F_{Rxges}$) liegt, wobei die Y-Richtung eine Richtung ausgehend von der Drehachse der Bremsscheibe (Z-Achse) radial durch den Schwerpunkt des Bremsbelags (4) beschreibt, **dadurch gekennzeichnet, dass** der Bremsbelag (4) derart in dem Bremsträger (1) gehalten ist, dass beim Ein- und Ausbau eine Schwenkbewegung oder eine kombinierte Schwenk- und Radialbewegung erforderlich ist, wobei das auslaufseitige Trägerhorn (2) des Bremsträgers (1) und die diesem benachbarte Stützfläche (421) der Belagträgerplatte (42) derart geformt sind, dass der Bremsbelag (4) um eine zur Drehachse (C) der Bremsscheibe (5) parallele Schwenkachse entgegen der Hauptdrehrichtung der Bremsscheibe (5) verschwenkbar ist.

**2.** Scheibenbremse nach Anspruch 1 oder nach dem Oberbegriff des Anspruchs 1, **dadurch gekennzeichnet, dass** das auslaufseitige Trägerhorn (2) gegenüber dem einlaufseitigen Trägerhorn (3) abgesenkt ausgebildet ist.

**3.** Scheibenbremse nach Anspruch 1 oder 2, **dadurch gekennzeichnet, dass** - betrachtet in X-Richtung ausgehend von der Drehachse der Bremsscheibe (Z-Achse), wobei die X-Richtung senkrecht zur Drehachse der Bremsscheibe verläuft und die Drehachse die X-Richtung kreuzt - die höchste Abstützstelle (A) am auslaufseitigen Trägerhorn (2) einen Abstand (h) > 0 zur Kraftwirkungslinie ($F_{Rxges}$) aufweist.

**4.** Scheibenbremse nach Anspruch 3, **dadurch gekennzeichnet, dass** der Abstand (h) der Abstützstelle (A) am auslaufseitigen Trägerhorn (2) von der Kraftwirkungslinie ($F_{Rxges}$) mindestens oder mehr als das 0,1-fache der Länge (l) des Bremsbelags (4) in Richtung der Kraftwirkungslinie ($F_{Rxges}$) beträgt.

**5.** Scheibenbremse nach einem der Ansprüche 3 bis 4, **dadurch gekennzeichnet, dass** der Abstand (h) der Abstützstelle (A) am auslaufseitigen Trägerhorn (2) von der Kraftwirkungslinie ($F_{Rxges}$) zwischen 0,1 und 0,25 mal der Breite (b) des Bremsbelags (4) senkrecht zur Richtung der Kraftwirkungslinie ($F_{Rxges}$) beträgt.

**6.** Scheibenbremse nach einem der vorstehenden Ansprüche, **dadurch gekennzeichnet, dass** das einlaufseitige Trägerhorn (3) höher ist als ein Schnittpunkt der Kraftwirkungslinie ($F_{Rxges}$) mit dem einlaufseitigen Trägerhorn (3).

**7.** Scheibenbremse nach einem der vorstehenden Ansprüche, **dadurch gekennzeichnet, dass** die dem einlaufseitigen Trägerhorn (3) des Bremsträgers (1) benachbarte Stützfläche (422) der Belagträgerplatte (42) einen Versatz (424) aufweist, der in eine dem Versatz (424) entsprechende Hinterschneidung (32) am einlaufseitigen Trägerhorn (3) eingreift.

**8.** Scheibenbremse nach Anspruch 7, **dadurch gekennzeichnet, dass** die Hinterschneidung (32) sich als Vorsprung in Richtung der Hauptdrehrichtung (HDR) der Bremsscheibe (5) erstreckt und von der Belagträgerplatte (42) einlaufseitig untergriffen wird, derart, dass der Bremsbelag (4) nicht direkt radial relativ zum Bremsscheibenmittelpunkt (C) aus dem Bremsträger (1) entnehmbar ist.

**9.** Scheibenbremse nach Anspruch 8, **dadurch gekennzeichnet, dass** die Hinterschneidung (32) sich als Vorsprung in Richtung der Hauptdrehrichtung (HDR) der Bremsscheibe (5) erstreckt und von der Belagträgerplatte (42) nur einlaufseitig untergriffen wird, derart, dass der Bremsbelag (4) nicht direkt radial relativ zum Bremsscheibenmittelpunkt (C) aus dem Bremsträger (1) entnehmbar ist.

**10.** Scheibenbremse nach einem der vorstehenden Ansprüche, **dadurch gekennzeichnet, dass** der Versatz (424) der dem einlaufseitigen Trägerhorn (3) des Bremsträgers (1) benachbarten Stützfläche (422) der Belagträgerplatte (42) derart geformt ist, dass der Bremsbelag (4) um eine zur Drehachse (C) der Bremsscheibe (5) parallele Schwenkachse entgegen der Hauptdrehrichtung (HDR) der Bremsscheibe (5) verschwenkbar ist.

11. Scheibenbremse nach einem der vorstehenden Ansprüche, **dadurch gekennzeichnet, dass** das auslaufseitige Trägerhorn (2) und eine korrespondierende Anlagekontur der Belagträgerplatte (42) eine um einen Neigungswinkel ($\alpha$) geneigte Abstützfläche (21, 423) aufweisen.

12. Scheibenbremse nach Anspruch 11, **dadurch gekennzeichnet, dass** der Neigungswinkel ($\alpha$) kleiner ist als die Summe eines Krafteinleitungswinkels ($\gamma$) und dem Arcus Tangens eines Reibungswertes $\mu_a$ an der Abstützstelle (A) am auslaufseitigen Trägerhorn (2).

13. Scheibenbremse nach Anspruch 12, **dadurch gekennzeichnet, dass** der Neigungswinkel ($\alpha$) zwischen 8° und 30° liegt.

14. Scheibenbremse nach einem der vorstehenden Ansprüche, **dadurch gekennzeichnet, dass** die Schwenkachse, um die der Bremsbelag (4) verschwenkbar ist, im Bereich der dem einlaufseitigen Trägerhorn (3) des Bremsträgers (1) benachbarten Stützfläche (422) der Belagträgerplatte (42) nahe einem Kopfbereich (33) des einlaufseitigen Trägerhorns (3) liegt.

15. Scheibenbremse nach einem der vorstehenden Ansprüche, **dadurch gekennzeichnet, dass** die dem auslaufseitigen Trägerhorn (2) des Bremsträgers (1) benachbarte Stützfläche (421) der Belagträgerplatte (42) einen das Trägerhorn (2) zumindest teilweise übergreifenden Versatz (423) aufweist.

16. Scheibenbremse nach einem der vorstehenden Ansprüche, **dadurch gekennzeichnet, dass** das auslaufseitige Trägerhorn (2) gegenüber dem einlaufseitigen Trägerhorn (3) asymmetrisch zu einer den Bremsbelag (4) mittig durchschneidenden und durch die Drehachse (C) der Bremsscheibe verlaufenden Spiegelachse ausgebildet ist.

17. Scheibenbremse nach einem der vorstehenden Ansprüche, **dadurch gekennzeichnet, dass** der von der Bremsbelagreibfläche überstrichene Winkel in Umfangsrichtung größer als 25°, insbesondere größer als 30° ist.

18. Scheibenbremse nach einem der vorstehenden Ansprüche, **dadurch gekennzeichnet, dass** das einlaufseitige Trägerhorn (3) des Bremsträgers (1) und die diesem benachbarte Stützfläche (422) der Belagträgerplatte (42) formschlüssig ineinander greifen.

19. Scheibenbremse nach einem der vorstehenden Ansprüche, **dadurch gekennzeichnet, dass** das einlaufseitige Trägerhorn (3) ein Kopfstück (33) aufweist, das den Versatz (424) an der dem einlaufseitigen Trägerhorn (3) benachbarten Stützfläche (422) der Belagträgerplatte (42) übergreift.

20. Scheibenbremse nach einem der vorstehenden Ansprüche, **dadurch gekennzeichnet, dass** die Länge der den Bremsbelag (4) seitlich teilweise einfassenden Stützflächen (21, 31) des einlaufseitigen Trägerhorns (3) mehr als die Hälfte der Höhe $h_B$ der Belagträgerplatte (42) beträgt.

## Claims

1. Disc brake of a motor vehicle, in particular of a commercial vehicle, having a brake calliper (8) which encompasses a brake disc (5) in sections in a circumferential region and having an adapter (1) which can be fixed in a static manner to the vehicle, in which adapter is guided at least one brake pad (4) which is provided with a backing plate (42) and with a friction lining (41) fastened thereto, wherein the adapter (1) has adapter lugs (2, 3) which support the backing plate (42) of the brake pad (4) at the entry side and exit side in a main direction of rotation (HDR) of the brake disc (5), wherein the entry-side adapter lug (3) of the adapter (1) and the support surface (422), which is situated adjacent thereto, of the backing plate (42) engage with one another, wherein the brake pad (4) is supported on the exit-side adapter lug (2) at a highest support point (A) in the Y direction relative to the brake disc axis of rotation, which support point lies below a force action line ($F_{Rxges}$) which represents the total friction force acting on the brake pad (4), wherein the Y direction describes a direction starting from the axis of rotation of the brake disc (Z axis) and extending radially through the centre of gravity of the brake pad (4), **characterised in that** the brake pad (4) is held in the adapter (1) in such a way that, during installation and removal, a combined pivoting and radial movement is required, wherein the exit-side adapter lug (2) of the adapter (1) and the support surface (421), which is adjacent thereto, of the backing plate (42) are shaped such that the brake pad (4) is pivotable about a pivot axis, which is parallel to the axis of rotation (C) of the brake disc (5), counter to the main direction of rotation of the brake disc (5).

2. Disc brake according to claim 1 or to the preamble of claim 1, **characterised in that** the exit-side adapter lug (2) is formed so as to be lower than the entry-side adapter lug (3).

3. Disc brake according to claim 1, **characterised in that** - as viewed in the X direction from the axis of rotation of the brake disc (Z axis), wherein the X direction runs perpendicular to the axis of rotation of the brake disc and the axis of rotation intersects the X direction - the highest support point (A) at the exit-side adapter lug (2) has a distance (h) > 0 from the force action line ($F_{Rxges}$).

4. Disc brake according to claim 3, **characterised in that** the distance (h) of the support point (A) at the exit-side adapter lug (2) from the force action line ($F_{Rxges}$) amounts to at least or more than 0.1 times the length (1) of the brake pad (4) in the direction of the force action line ($F_{Rxges}$).

5. Disc brake according to claim 3 or 4, **characterised in that** the distance (h) of the support point (A) at the exit-side adapter lug (2) from the force action line ($F_{Rxges}$) amounts to between 0.1 and 0.25 times the width (b) of the brake pad (4) perpendicular to the direction of the force action line ($F_{Rxges}$).

6. Disc brake according to any of the preceding claims, **characterised in that** the entry-side adapter lug (3) is higher than a point of intersection of the force action line ($F_{Rxges}$) with the entry-side adapter lug (3).

7. Disc brake according to any of the preceding claims, **characterised in that** the support surface (422) of the backing plate (42) which is adjacent to the entry-side adapter lug (3) of the adapter (1) has an offset (424) which engages with an undercut (32), which corresponds to the offset (424), on the entry-side adapter lug (3).

8. Disc brake according to claim 7, **characterised in that** the undercut (32) extends as a projection in the direction of the main direction of rotation (HDR) of the brake disc (5) and is engaged from below by the backing plate (42) at the entry side, in such a way that the brake pad (4) cannot be removed from the adapter (1) directly radially relative to the brake disc central point (C).

9. Disc brake according to claim 8, **characterised in that** the undercut (32) extends as a projection in the direction of the main direction of rotation (HDR) of the brake disc (5) and is engaged from below by the backing plate (42) only at the entry side, in such a way that the brake pad (4) cannot be removed from the adapter (1) directly radially relative to the brake disc central point (C).

10. Disc brake according to any of the preceding claims, **characterised in that** the offset (424) of that support surface (422) of the backing plate (42) which is adjacent to the entry-side adapter lug (3) of the adapter (1) is shaped such that the brake pad (4) is pivotable about a pivot axis which is parallel to the axis of rotation (C) of the brake disc (5), counter to the main direction of rotation (HDR) of the brake disc (5).

11. Disc brake according to any of the preceding claims, **characterised in that** the exit-side adapter lug (2) and a corresponding abutment contour of the backing plate (42) have a support surface (21, 423) which is inclined by an angle of inclination ($\alpha$).

12. Disc brake according to claim 11, **characterised in that** the angle of inclination ($\alpha$) is smaller than the sum of a force introduction angle ($\gamma$) and the arctangent of a friction value $\mu_a$ at the support point (A) at the exit-side adapter lug (2).

13. Disc brake according to claim 12, **characterised in that** the angle of inclination ($\alpha$) is between 8° and 30°.

14. Disc brake according to any of the preceding claims, **characterised in that** the pivot axis about which the brake pad (4) is pivotable is situated in the region of that support surface (422) of the backing plate (42) which is adjacent to the entry-side adapter lug (3) of the adapter (1), close to a head region (33) of the entry-side adapter lug (3).

15. Disc brake according to any of the preceding claims, **characterised in that** the support surface (421) of the backing plate (42) which is adjacent to the exit-side adapter lug (3) of the adapter (1) has an offset (423) which engages at least partially over the adapter lug (2).

16. Disc brake according to any of the preceding claims, **characterised in that** the exit-side adapter lug (2) is formed so as to be asymmetrical with respect to the entry-side adapter lug (3) about a mirror axis which extends centrally through the brake pad (4) and which runs through the axis of rotation (C) of the brake disc.

17. Disc brake according to any of the preceding claims, **characterised in that** the angle covered by the brake pad friction surface in the circumferential direction is greater than 25°, in particular greater than 30°.

18. Disc brake according to any of the preceding claims, **characterised in that** the entry-side adapter lug (3) of the adapter (1) the support surface (422), which is adjacent thereto, of the backing plate (42) engage with one another in a positively locking manner.

19. Disc brake according to any of the preceding claims, **characterised in that** the entry-side adapter lug (3) has a head piece (33) which engages over the offset (424) on that support surface (422) of the backing plate (42) which is adjacent to the entry-side adapter lug (3).

20. Disc brake according to any of the preceding claims, **characterised in that** the length of the support surfaces (21, 31), which laterally partially enclose the brake pad (4), of the entry-side adapter lug (3) amounts to more than half of the height $h_B$ of the backing plate (42).

**Revendications**

1. Frein à disque d'un véhicule automobile, notamment d'un véhicule utilitaire, comportant un étrier (8) de frein recouvrant par endroit un disque (5) de frein dans une région périphérique et un support (1) de frein pouvant être fixé à poste fixe du côté du véhicule, dans lequel est guidée au moins une garniture (4) de frein pourvue d'une plaque (42) de porte-garniture et d'une garniture (41) de frottement qui y est fixée, le support (1) de frein ayant, dans un sens (HDR) de rotation principal du disque (5) de frein, du côté de l'entrée et du côté de la sortie, des cornes (2, 3) de support soutenant la plaque (42) du porte-garniture de la garniture (4) de frein, la corne (3) du côté de l'entrée du support (1) de frein et les surfaces (422) d'appui qui en sont voisine, de la plaque (42) du porte-garniture, s'interpénétrant, la garniture (4) de frein étant appuyée sur la corne (2) du support du côté de la sortie en un point (A) d'appui le plus haut dans la direction Y par rapport à l'axe de rotation du frein à disque, point qui, par rapport à l'axe de rotation du frein à disque, est en dessous d'une ligne ($F_{Rxges}$) d'application d'une force représentant la force de frottement totale s'appliquant à la garniture (4) de frein, la direction Y décrivant une direction partant de l'axe de rotation du disque de frein (axe Z) radialement en passant par le centre de gravité de la garniture (4) de frein, **caractérisé en ce que** la garniture (4) de frein est maintenue dans le support (1) de frein, de manière à ce qu'au montage et au démontage un mouvement de pivotement ou un mouvement combiné de pivotement et radial soit nécessaire, la corne du côté de la sortie du support (1) de frein et la surface (421) d'appui, qui en est voisine de la plaque (42) du porte-garniture, étant conformées de manière à ce que la garniture (4)de frein puisse pivoter dans le sens contraire au sens de rotation principal du disque (5) de frein autour d'un axe de pivotement parallèle à l'axe (C) de rotation du disque (5) de frein.

2. Frein à disque suivant la revendication 1 ou suivant le préambule de la revendication 1, **caractérisé en ce que** la corne (2) du support du côté de la sortie est abaissée par rapport à la corne (3) du support du côté de l'entrée.

3. Frein à disque suivant la revendication 1 ou 2, **caractérisé en ce que**, considéré dans la direction X en partant de l'axe de rotation du disque de frein (axe Z), la direction X s'étendant perpendiculairement à l'axe de rotation du disque de frein et l'axe de rotation croisant la direction X, le point (A) d'appui le plus haut à la corne (2) de support du côté de la sortie a une distance (h)> 0 à la ligne ($F_{Rxges}$) d'application d'une force.

4. Frein à disque suivant la revendication 3, **caractérisé en ce que** la distance (h) du point (A) d'appui à la corne (2) du support du côté de la sortie à la ligne ($F_{Rxges}$) d'application d'une force représente au moins ou plus que 0,1 fois la longueur (I) de la garniture (4) de frein dans la direction de la ligne ($F_{Rxges}$) d'application d'une force.

5. Frein à disque suivant l'une des revendications 3 à 4, **caractérisé en ce que** la distance (h) du point (A), d'appui à la corne (2) du support du côté de la sortie à la ligne ($F_{Rxges}$) d'application d'une force représente entre 0,1 et 0,25 fois la largeur (b) de la garniture (4) de frein perpendiculairement à la direction de la ligne ($F_{Rxges}$) d'application d'une force.

6. Frein à disque suivant l'une des revendications précédentes, **caractérisé en ce que** la corne (3)du support du côté de l'entrée est plus haute qu'un point d'intersection de la ligne ($F_{Rxges}$) d'application d'une force avec la corne (3) du support du côté de l'entrée.

7. Frein à disque suivant l'une des revendications précédentes, **caractérisé en ce que** la surface (422) d'appui, voisine de la corne (3) du support du côté de l'entrée du support (1) de frein, de la plaque (42) du porte-garniture, a une saillie (424) qui pénètre dans une contre-dépouille (32), correspondant à la saillie (424), de la corne (3) du support du côté de l'entrée.

8. Frein à disque suivant la revendication 7, **caractérisé en ce que** la contre-dépouille (32) s'étend sous la forme d'une saillie dans la direction du sens (HDR) de rotation principal du frein (5) à disque et est accrochée par en dessous du côté de l'entrée par la plaque (42) du porte-garniture, de manière à ce que le porte-garniture (4) ne puisse pas être enlevé du support (1) de frein directement radialement par rapport au centre (C) du disque de frein.

9. Frein à disque suivant la revendication 8, **caractérisé en ce que** la contre-dépouille (32) s'étend sous la forme d'une saillie dans la direction du sens (HDR) de rotation principal du disque (5) de frein et est prise par en dessous par la plaque (42) du porte-garniture seulement du côté de l'entrée, de manière à ce que la garniture (4) de frein ne puisse pas être enlevée du support (1) de frein directement radialement par rapport au centre (C) du disque de frein.

10. Frein à disque suivant l'une des revendications précédentes, **caractérisé en ce que** la saillie (424) de la surface (422) d'appui, voisine de la corne (3) du côté de l'entrée du support (1) de frein, de la plaque (42) du porte-garniture est conformé de manière à ce que la garniture (4) de frein puisse pivoter dans le sens contraire au sens (HDR) de rotation principal du disque (5) de frein autour d'un axe de pivotement parallèle à l'axe (C) de rotation du disque (5) de frein.

11. Frein à disque suivant l'une des revendications précédentes, **caractérisé en ce que** la corne (2) du support du côté de la sortie et un contour d'application correspondant de la plaque (42) du porte-garniture ont une surface (21, 423) d'appui inclinée d'un angle ($\alpha$) d'inclinaison.

12. Frein à disque suivant la revendication 11, **caractérisé en ce que** l'angle ($\alpha$) d'inclinaison est plus petit que la somme d'un angle ($\gamma$) d'application de force et de l'arc tangente d'une valeur $\mu_a$ de frottement au point (A) d'appui à la corne (2) du support du côté de la sortie.

13. Frein à disque suivant la revendication 12, **caractérisé en ce que** l'angle ($\alpha$) d'inclinaison est compris entre 8° et 30°.

14. Frein à disque suivant l'une des revendications précédentes, **caractérisé en ce que** l'axe de pivotement, autour duquel la garniture (4) de frein peut pivoter, est, dans la région de la surface (422) d'appui, voisine de la corne (3) du support (1) de frein du côté de l'entrée, de la plaque (42) du porte-garniture, près d'une partie (33) de tête de la corne (3) du support du côté de l'entrée.

15. Frein à disque suivant l'une des revendications précédentes, **caractérisé en ce que** la surface (421) d'appui, voisine de la corne (2) du support (1) de frein du côté de la sortie, de la plaque (42) du porte-garniture, a une saillie (423) recouvrant au moins en partie la corne (2) du support.

16. Frein à disque suivant l'une des revendications précédentes, **caractérisé en ce que** la corne (2) du support du côté de la sortie est constituée, par rapport à la corne (3) du support du côté de l'entrée, dissymétriquement par rapport à un axe de symétrie coupant au milieu la garniture (4) de frein et passant par l'axe (C) de rotation du disque de frein.

17. Frein à disque suivant l'une des revendications précédentes, **caractérisé en ce que** l'angle parcouru par la surface de frottement de la garniture de frein dans la direction périphérique est plus grand que 25°, notamment plus grand que 30°.

18. Frein à disque suivant l'une des revendications précédentes, **caractérisé en ce que** la corne (3) du support (1) de frein du côté de l'entrée et la surface (422) d'appui, qui en est voisine, de la plaque (42) du porte-garniture s'interpénètrent à complémentarité de forme.

19. Frein à disque suivant l'une des revendications précédentes, **caractérisé en ce que** la corne (3) de support du côté de l'entrée a une pièce (33) de tête, qui recouvre la saillie (424) sur la surface (422) d'appui, voisine de la corne (3) du support du côté de l'entrée, de la plaque (42) du porte-garniture.

20. Frein à disque suivant l'une des revendications précédentes, **caractérisé en ce que** la longueur des surfaces (21, 31) d'appui, bordant en partie latéralement la longueur de la garniture (4) de frein, de la corne (3) du support du côté de l'entrée, représente plus de la moitié de la hauteur $h_B$ de la plaque (42) de la garniture de frein.

Fig. 1    Stand der Technik

Fig. 2

Fig. 3

EP 2 756 205 B1

Fig. 4a

Fig. 4b

Fig. 4c

Fig. 4d

Fig. 5

Fig. 6

a)

b)

c)

Fig. 6

Fig. 7

EP 2 756 205 B1

Fig. 8

28

Fig. 9

a)

b)

c)

Fig. 10

Fig. 11

EP 2 756 205 B1

Fig. 12

$F_{Rges}$

411  414  41  42  4

23  A  33  32

21  31

24  34  413

11  412  1

EP 2 756 205 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2926818 A1
- EP 1234994 A2

- GB 2163500 A